# EUROPÄISCHE PATENTSCHRIFT

(11) **EP 2 769 344 B1**
(45) Veröffentlichungstag und Bekanntmachung des Hinweises auf die Patenterteilung: **29.05.2019**
(21) Anmeldenummer: 12778087.2
(22) Anmeldetag: 18.10.2012
(51) Int. Cl.: G06Q 10/08, G01C 21/00

(54) **VERGLEICHEN VON POSITIONSINFORMATIONEN**
COMPARISON OF POSITION INFORMATION
COMPARAISON D'INFORMATIONS DE POSITION

(30) Priorität: 20.10.2011 EP 11185889
(43) Veröffentlichungstag der Anmeldung: 27.08.2014
(73) Patentinhaber: Deutsche Post AG, 53113 Bonn (DE)
(72) Erfinder: JOSEFIAK, Frank, 53177 Bonn Bad Godesberg (DE)
(74) Vertreter: Cohausz & Florack
(86) Internationale Anmeldenummer: PCT/EP2012/070627
(87) Internationale Veröffentlichungsnummer: WO 2013/057174

(56) Entgegenhaltungen:
- EP-A1- 1 667 059
- WO-A1-2009/088538
- WO-A2-2006/065492
- WO-A2-2006/107895
- DE-A1-102006 057 644
- GB-A- 2 414 090
- JP-A- 2009 228 231
- US-A1- 2002 123 917
- US-A1- 2004 124 977
- US-A1- 2006 229 895

## Beschreibung

### Gebiet der Erfindung

Die vorliegende Erfindung betrifft unter anderem ein Verfahren, eine Vorrichtung, ein System, ein Programm und ein Speichermedium zum Vergleichen von Positionsinformationen.

### Hintergrund der Erfindung

In jüngster Zeit hat die (Echtzeit-)Überwachung beispielsweise von Sendungen, Transportbehältern und/oder Transportfahrzeugen an Bedeutung gewonnen. Dazu werden die Transportbehälter und Transportfahrzeuge beispielsweise mit elektronischen Geräten ausgestattet, die für die Überwachung relevante Kenngrößen erfassen und kabellos (beispielsweise über ein Mobilfunknetz) an eine Datenbank eines Datenbankservers übermitteln können, wo sie in einem entsprechenden Datensatz gespeichert werden. Auch können zur Verfolgung von Sendungen sogenannte Scanpositionen vorgesehen sein; sobald eine Sendung eine solche Scanposition passiert, wird beispielsweise als letzte bekannte Position der Sendung die Scanposition in einem entsprechenden Datensatz der Datenbank gespeichert.

Um den Verlauf einer Sendung zu überwachen, wird einem Benutzer beispielsweise eine Kennung der Sendung mitgeteilt, beispielsweise eine Trackingnummer. Dadurch kann der Benutzer eine Suchanfrage mit der Kennung an die Datenbank stellen. Als Ergebnis der Suchanfrage wird dem Benutzer dann beispielsweise die letzte bekannte Position aus dem der Sendung zugeordneten Datensatz, zum Beispiel die letzte Scanposition der Sendung, auf einer Karte angezeigt. Oft ist ein Benutzer jedoch an weiteren Informationen betreffend die Sendung interessiert, wie beispielsweise der aktuellen Position der Sendung und der voraussichtlichen Ankunftszeit der Sendung. Um diese Informationen abzurufen, kann der Benutzer beispielsweise eine zusätzliche Suchanfrage, in der das Transportfahrzeug, mit dem die Sendung transportiert wird, identifiziert wird, an eine Datenbank stellen. Als Ergebnis der zusätzlichen Suchanfrage wird dem Benutzer dann beispielsweise die letzte bekannte Position, zum Beispiel die aktuelle Position des Transportfahrzeugs, und die voraussichtliche Ankunftszeit des Transportfahrzeugs am Zielort aus dem dem Transportfahrzeug zugeordneten Datensatz auf der Karte angezeigt. Dies ist unter anderem nachteilig, da der Benutzer neben der Kennung der Sendung auch die Kennung des Transportfahrzeugs kennen und zwei Suchanfragen stellen muss. Meistens kennt der Benutzer die unterschiedlichen Datenquellen jedoch gar nicht und kann sie auch gar nicht kennen, so dass er ein Zusammenführen der Daten überhaupt nicht ermöglichen kann.

In der US 2004/0124977 A1 wird ein Überwachungssystem beschrieben, das sowohl die Lieferung von Gegenständen verfolgt als auch aktiv eingreifen kann, um beispielsweise die Transportpriorität eines Gegenstands zu steigern oder zu senken. Dazu werden der Gegenstand und/oder das Transportmittel mit einem verfolgbaren Tag versehen, mittels welchem Daten wie z.B. die Position bestimmt werden können. Durch Vergleich der Daten kann so sichergestellt werden, dass der zu liefernde Gegenstand tatsächlich mit dem vorgesehenen Transportmittel transportiert wird.

Die US 2006/0229895 A1 beschreibt ein Verfahren zum Verfolgen von einer oder mehrerer Sendungen. Dazu wird ein Satz von erwarteten Ereignissen für jede der einen mehreren Sendungen erstellt. Beim Versand werden die Sendungen daraufhin überwacht, ob ein Ereignis aus dem Satz von erwarteten Ereignissen eintrifft oder nicht eintrifft. Kommt es zu nicht zu einem Eintreffen eines der erwarteten Ereignisse, wird dieses Nichteintreffen berichtet.

### Allgemeine Beschreibung einiger beispielhafter Ausführungsformen der Erfindung

Die vorliegende Erfindung hat sich daher unter anderem die Aufgabe gestellt, die oben genannten Nachteile zu überwinden.

In der vorliegenden Spezifikation wird ein in dieser Breite nicht unter die beanspruchte Erfindung fallendes Verfahren, ausgeführt von zumindest einer Vorrichtung, offenbart, das gemäß einem ersten, zweiten und dritten Aspekt das Vergleichen einer ersten Positionsinformation mit zumindest einer zweiten Positionsinformation, um eine Ähnlichkeit zwischen der ersten Positionsinformation und der zweiten Positionsinformation festzustellen, wobei die erste Positionsinformation einer ersten Transporteinheit oder einer Einheit zur Erzeugung von Positionsinformationen zugeordnet ist, und wobei die zweite Positionsinformation einer zweiten Transporteinheit oder einem Standort für eine Transporteinheit zugeordnet ist.

Gemäß dem ersten Aspekt umfasst das Verfahren ferner, wenn als Ergebnis des Vergleichs eine Ähnlichkeit zwischen der ersten und der zweiten Positionsinformation festgestellt wird, das Assoziieren der ersten Transporteinheit mit der zweiten Transporteinheit oder mit dem Standort.

Gemäß dem zweiten Aspekt umfasst das Verfahren ferner, wenn als Ergebnis des Vergleichs keine Ähnlichkeit zwischen der ersten und der zweiten Positionsinformation festgestellt wird, das Ausgeben einer Information betreffend das Ergebnis des Vergleichs.

Gemäß dem dritten Aspekt umfasst das Verfahren ferner das Einwirken auf das Erzeugen der ersten und/oder zweiten Positionsinformation in Abhängigkeit des Ergebnisses des Vergleichs, beispielsweise wenn als Ergebnis des Vergleichs eine Ähnlichkeit zwischen der ersten und der zweiten Positionsinformation festgestellt wird und/oder wenn als Ergebnis des Vergleichs keine Ähnlichkeit zwischen der ersten und der zweiten Positionsinformation festgestellt wird.

Der erste, der zweite und der dritte Aspekt sollen als kombinierbare Aspekte verstanden werden.

Die beanspruchte Erfindung umfasst eine konkretisierte Ausgestaltung des ersten Aspekts, nämlich ein Verfahren gemäß Anspruch 1 (nachfolgend als erfindungsgemäßes Verfahren bezeichnet), eine Vorrichtung gemäß Anspruch 11 (nachfolgend als erfindungsgemäße Vorrichtung bezeichnet), ein System gemäß Anspruch 12 (nachfolgend als erfindungsgemäßes System bezeichnet), und ein Programm gemäß Anspruch 13 (nachfolgend als erfindungsgemäßes Programm bezeichnet). Weitere Ausführungsformen sind den abhängigen Ansprüchen zu entnehmen.

Das erfindungsgemäße Verfahren kann von einer oder mehreren Datenverarbeitungsvorrichtungen ausgeführt werden. Beispiele für eine Datenverarbeitungsvorrichtung sind ein Computer, ein Personalcomputer, ein tragbarer Computer, ein Thin-Client, ein persönlicher digitaler Assistent, ein Mobiltelefon, ein Positionssender und/oder jedes andere elektronisches Gerät, das zumindest einen Prozessor aufweist.

Insbesondere kann das erfindungsgemäße Verfahren von einem oder mehreren Servern ausgeführt werden, zum Beispiel von einem oder mehreren Servern eines Diensteanbieters für Logistikdaten, beispielsweise einem Sendungsverfolgungsdiensteanbieter. Das Verfahren kann auch von den Servern und zumindest von einem mit den Servern verbundenen Client ausgeführt werden. Unter einem Server soll insbesondere eine Datenverarbeitungseinheit in einem Netzwerk verstanden werden, die mit einer oder mehreren Datenverarbeitungseinheiten, den Clients, über das Netzwerk kommuniziert, um ihnen spezielle Dienste und/oder Rechenleistung bereitzustellen. In einer solchen Client-Server-Architektur können die von dem Server bereitgestellten speziellen Dienste und/oder die Rechenleistung von mehreren Clients genutzt werden, so dass die Clients selber beispielsweise weniger eigene Rechenleistung vorhalten müssen. Ein Server und ein Client können sowohl eine Datenverarbeitungsvorrichtung als auch ein Programm bezeichnen, das auf der Datenverarbeitungsvorrichtung ausgeführt wird. Das Netzwerk ist beispielsweise ein lokales Netzwerk, ein Weitverkehrsnetzwerk, ein virtuelles Netzwerk, ein Funknetzwerk, ein Telefonnetzwerk und/oder das Internet. Die Kommunikation erfolgt beispielsweise kabellos und/oder kabelgebunden.

Die Server können beispielsweise Datenbankserver sein. Beispiele für einen Datenbankserver sind ein Microsoft SQL Server, ein SQL Server, ein Oracle Server und ein MySQL Server. Die Server können beispielsweise Teil einer sogenannten Rechnerwolke sein, welche Datenverarbeitungsressourcen verschiedenen Benutzern über ein Netzwerk dynamisch zur Verfügung stellen kann. Unter einer Rechnerwolke soll insbesondere eine Datenverarbeitungsinfrastruktur gemäß der Definition des "National Institute for Standards and Technology" (NIST) für den englischen Begriff "Cloud Computing" verstanden werden. Ein Beispiel für eine Rechnerwolke ist die Microsoft Windows Azure Plattform.

Unter einer Transporteinheit soll beispielsweise eine bewegliche Einheit mit einer mobilen, veränderlichen Position verstanden werden, insbesondere eine Sendung, ein Transportbehälter oder ein Transportfahrzeug. Beispiele für eine Sendung sind ein Brief, ein Einschreiben, ein Päckchen, ein Paket, eine Palette oder eine Frachtlieferung. Ein Transportbehälter dient beispielsweise zur Aufnahme einer oder mehrerer Sendungen. Beispiele für einen Transportbehälter sind ein Zugwaggon, ein Container und eine Wechselbrücke. Ein Transportfahrzeug dient beispielsweise zum Transport einer oder mehrerer Sendungen und/oder eines oder mehrerer Transportbehälter. Beispiele für ein Transportfahrzeug sind ein Lastkraftwagen (LKW), ein Personenkraftwagen (PKW), ein Schiff, ein Flugzeug, ein Transporter oder ein Zug.

Unter einem Standort einer Transporteinheit soll insbesondere eine ortsfeste, einer Transporteinheit (dauerhaft und/oder zeitweise) zuweisbare Position verstanden werden. Beispiele für einen Standort einer Transporteinheit sind ein Lagerplatz, ein Umschlagplatz, ein Parkplatz, ein Regalplatz, ein Liegeplatz, ein Stellplatz, eine Warteposition, eine Parkposition oder ein Containerliegeplatz.

Unter einer Einheit zur Erzeugung von Positionsinformationen soll insbesondere ein elektronisches Gerät verstanden werden, dass Positionsinformationen erzeugt, also beispielsweise zumindest seine Position (beispielsweise eine aktuelle Position) ermittelt und über eine drahtlose oder drahtgebundene Verbindung zur Verfügung stellt, beispielsweise periodisch oder auf Anforderung. Es kann sich dabei beispielsweise um einen Positions- oder Ortungssender, einen Scanner an einer Scanposition und/oder ein Telematikgerät handeln. Die Positionsbestimmung kann beispielsweise auf satellitengestützten Positionierungssystemen (beispielsweise GPS od. Galileo) oder auf Mobilfunk beruhen (beispielsweise Mobilfunkzellenortung). Zum Beispiel kann die Einheit zur Erzeugung von Positionsinformationen dauerhaft oder temporär mit einer Transporteinheit gruppiert werden, zum Beispiel mit der Transporteinheit verbunden werden. Die Einheit zur Erzeugung von Positionsinformationen kann beispielsweise zum Nachrüsten von Transporteinheiten verwendet werden.

Unter einer Positionsinformation soll insbesondere eine Angabe einer räumlichen Position verstanden werden, zum Beispiel in Form von geographischen Breiten- und Längenangaben, Geofencing-Angaben oder Positionskoordinaten eines Mobilfunksystems, oder eines Satellitennavigationssystems (z.B. des Global Positioning Systems (GPS) oder des Galileo-Systems, z.B. Positionskoordinaten gemäß dem World Geodetic System 1984 Referenzsystem). Unter Geofencing soll insbesondere die Unterteilung eines geographischen Gebiets in einen oder mehrere (vorgegebene) Bereiche (sogenannte Geofencing-Bereiche) verstanden werden. Die Geofencing-Bereiche können beispielsweise für alle Positionsinformationen, die Transporteinheiten eines Logistikunternehmens zugeordnet sind, gleich sein. Beispielsweise kann eine Aktion ausgelöst werden, wenn eine Transporteinheit einen Geofencing-Bereich verlässt oder betritt, zum Beispiel kann ein Alarm ausgelöst werden und/oder eine Positionsinformation für die Transporteinheit erzeugt werden. Die Geofencing-Bereich können sowohl statisch als auch dynamisch sein. Eine Geofencing-Angabe beschreibt beispielsweise, in welchem der Geofencing-Bereiche sich die der Positionsinformation zugeordnete Transporteinheit befindet. Neben einer Position kann eine Positionsinformation ferner beispielsweise weitere Größen umfassen.

Eine Positionsinformation kann beispielsweise eine Automatic Identification System (AIS) Information sein und einige oder alle entsprechenden Größen umfassen. Das AIS betrifft ein System, das durch den Austausch von Positionsinformationen, Navigationsinformationen und/oder anderen Informationen unter anderem die Sicherheit im Schiffsverkehr verbessern soll. Eine Positionsinformation kann beispielsweise auch eine Automatic Dependent Surveillance (ADS) Information sein und einige oder alle entsprechenden Größen umfassen. Das ADS betrifft ein System, das durch den Austausch von Positionsinformationen, Navigationsinformationen und/oder anderen Informationen unter anderem die Sicherheit im Flugverkehr verbessern soll. In einem ADS-B (ADS-Broadcast) System werden die Informationen von einem Flugzeug beispielsweise in regelmäßigen Abständen und ungerichtet ausgesendet.

Eine einer Transporteinheit zugeordnete Positionsinformation kann beispielsweise die letzte bekannte Position der Transporteinheit umfassen. Eine einer Transporteinheit zugeordnete Positionsinformation kann beispielsweise in regelmäßigen Zeitabständen aktualisiert werden. Eine einer Transporteinheit zugeordnete Positionsinformation kann beispielsweise in unregelmäßigen Zeitabständen aktualisiert werden, zum Beispiel nur wenn sich die Position der Transporteinheit verändert, zum Beispiel wenn die Transporteinheit einen Geofencing-Bereich verlässt/betritt. Zum Beispiel wird die einer Transporteinheit zugeordnete Positionsinformation in regelmäßigen oder in unregelmäßigen Zeitabständen erzeugt, zum Beispiel von der Transporteinheit, zum Beispiel von einem Positionssender. Der Positionssender kann beispielsweise in der Transporteinheit integriert sein. Der Positionssender eines Transportfahrzeugs ist beispielsweise ein fahrzeugeigener Positionssender. Bei einer Sendung kann sich in oder an der Sendung ein Positionssender befinden. Zum Beispiel kann sich der Positionssender in einem Briefumschlag eines Briefs befinden.

Eine einer Transporteinheit zugeordnete Positionsinformation kann beispielsweise einen Zeitstempel umfassen. Der Zeitstempel wird beispielsweise aktualisiert, wenn die Positionsinformation aktualisiert wird.

Es ist auch denkbar, dass eine einer Transporteinheit zugeordnete Positionsinformation einen oder mehrere Wegpunkte einer für die Transporteinheit vorgesehenen Route umfasst. Zum Beispiel kann eine solche Route von einem Routenplanungssystem erzeugt werden, zum Beispiel von einem Routenplanungssystem des für die Transporteinheit verantwortlichen Logistikunternehmens. Dabei ist ein Wegpunkt eine Angabe einer räumlichen Position, zum Beispiel in Form von geographische Breiten- und Längenangaben oder Positionskoordinaten eines Mobilfunksystems oder eines Satellitennavigationssystems oder eine Adresse. Die Route kann beispielsweise eine vorgegebene Abfolge von Wegpunkten (beispielsweise Containerumschlagplätzen) enthalten, die in dieser Reihenfolge von der Transporteinheit passiert werden sollen. Die der Transporteinheit zugeordnete Positionsinformation kann auch eine oder mehrere Geofencing-Angaben für Geofencing-Bereiche, durch die die Route verläuft, umfassen. Zum Beispiel kann die Route auch für jeden Wegpunkt und/oder Geofencing-Bereich eine Zeit, beispielsweise ein Zeitintervall, vorgeben, zu der der Wegpunkt passiert werden soll. Zum Beispiel kann vorgegeben sein, dass eine Transporteinheit einen Wegpunkt und/oder einen Geofencing-Bereich an einem bestimmten Tag und/oder zwischen zwei bestimmten Uhrzeiten an dem Tag passieren soll. Zum Beispiel kann ein Routenplanungssystem eines Spediteurs für ein Transportfahrzeug jeden Tag eine Tagesroute erstellen, die als Wegpunkte eine Abfolge der von dem Transportfahrzeug an dem Tag anzufahrenden Kunden enthält. In diesem Fall umfasst eine dem Transportfahrzeug zugeordnete Positionsinformation aus dem Routenplanungssystem jeweils einen Wegpunkt und/oder eine entsprechende Geofencing-Angabe (als Position des Transportfahrzeugs) und das Datum des jeweiligen Tages (als Zeitstempel).

Eine einem Standort für eine Transporteinheit zugeordnete Positionsinformation kann beispielsweise eine Position des Standorts für eine Transporteinheit umfassen. Eine einem Standort für eine Transporteinheit zugeordnete Positionsinformation kann beispielsweise lediglich einmalig bestimmt werden.

Eine Positionsinformation kann beispielsweise in einem Datensatz in einer Datenbank gespeichert werden. Eine einer Transporteinheit zugeordnete Positionsinformation kann beispielsweise in einem der Transporteinheit zugeordneten Datensatz in einer Positionsdatenbank, einer Fuhrparkdatenbank, einer Telematikdatenbank, einer Sendungsverfolgungsdatenbank und/oder einer Logistikdatenbank gespeichert werden. Eine einem Standort für eine Transporteinheit zugeordnete Positionsinformation kann beispielsweise in einem dem Standort zugeordneten Datensatz in einer Standortdatenbank gespeichert sein.

Ein einer Transporteinheit, einer Einheit zur Erzeugung von Positionsinformationen oder einem Standort zugeordneter Datensatz kann neben der Positionsinformation weitere Kenngrößen der Transporteinheit, der Einheit zur Erzeugung von Positionsinformationen oder des Standorts umfassen. Beispiele für solche Kenngrößen sind eine Kennung, ein Typ, eine Identifikation des verantwortlichen Logistikunternehmens, ein oder mehrere zeitbezogene Kriterien, eine aktuelle Geschwindigkeit, eine Durchschnittsgeschwindigkeit, eine Temperatur, eine Luftfeuchtigkeit, eine Startadresse, eine Zieladresse, eine geplante Route, eine Beladung und weitere Positionsinformationen (z.B. Positionsinformationen mit einem anderen Zeitstempel).

Die erste Positionsinformation und die zweite Positionsinformation können aus unterschiedlichen Datenquellen stammen, zum Beispiel aus Datenbanken unterschiedlicher Anbieter. Zum Beispiel können die Positionsinformationen von Transportfahrzeugen in einer anderen Datenbank als die Positionsinformationen von Sendungen gespeichert sein. Zum Beispiel sind die den Transporteinheiten eines Logistikunternehmens zugeordneten Positionsinformationen in Datensätzen in einer Telematikdatenbank eines Telematikdiensteanbieters gespeichert. Zum Beispiel bieten Hersteller von LKWs oder Trailern solche Telematikdienste an. Die den Sendungen, für die ein Logistikunternehmen verantwortlich ist, zugeordneten Positionsinformationen sind zum Beispiel in Datensätzen einer Sendungsverfolgungsdatenbank des Logistikunternehmens oder eines Sendungsverfolgungsdiensteanbieters gespeichert. Bei dem Vergleich können somit Informationen aus Datenbanken unterschiedlicher Anbieter berücksichtigt werden. Dies ist unter anderem vorteilhaft, um einen anbieter- und/oder datenbankübergreifenden Vergleich zu ermöglichen. Außerdem können dadurch Datensätze (automatisch) miteinander verknüpft werden, die vorher nicht miteinander verknüpft waren.

Die erste Positionsinformation wird beispielsweise von der ersten Transporteinheit, der Einheit zur Erzeugung von Positionsinformationen oder einer Kontrollstation erzeugt und zum Beispiel in einem Datensatz in einer Datenbank gespeichert. Die zweite Positionsinformation wird beispielsweise von der zweiten Transporteinheit oder einer Kontrollstation erzeugt oder für den Standort bestimmt/ermittelt. Alternativ kann die zweite Positionsinformation beispielsweise auch von einem Routenplanungssystem erzeugt werden. Die zweite Positionsinformation wird zum Beispiel in einem Datensatz in der Datenbank oder in einer weiteren Datenbank gespeichert. Insbesondere ist es auch denkbar, dass die erste Positionsinformation genauer ist als die zweite Positionsinformation, also beispielsweise eine höhere geographische Auflösung besitzt. Zum Beispiel umfasst die erste Positionsinformation Positionskoordinaten eines Satellitennavigationssystems, beispielsweise mit einer Genauigkeit von zumindest 50m, und die zweite Positionsinformation umfasst eine Ortsangabe, Ortsbereichsangabe oder Geofencing-Angabe, zum Beispiel für einen Geofencing-Bereich der einen oder mehrere Quadratkilometer umfasst, zum Beispiel ein Stadtgebiet oder ein Stadtteil.

Zum Vergleichen der ersten und der zweiten Positionsinformation kann es vorteilhaft sein, die in den Positionsinformationen angegebenen Positionen in eine einheitliche Form (beispielsweise ein einheitliches Datenformat) umzuwandeln. Zum Beispiel kann eine Adresse in eine geographische Breiten- und Längenangabe umgewandelt werden. Eine Ortsangabe (z.B. Köln oder Paris) kann beispielsweise in eine Geofencing-Angabe umgewandelt werden, die den Geofencing-Bereich angibt, der den Ort umfasst. Eine solche Umwandlung kann beispielsweise durch einen Abgleich mit einer Datenbank erfolgen.

Das Vergleichen der ersten Positionsinformation mit der zumindest einen zweiten Positionsinformation soll derart verstanden werden, dass die erste Positionsinformation jeweils mit einer oder mehreren zweiten Positionsinformationen verglichen wird. Wenn die erste Positionsinformation mit mehreren zweiten Positionsinformationen verglichen wird, kann die erste Positionsinformation zum Beispiel mit jeder der zweiten Positionsinformationen einzeln verglichen werden. Zum Beispiel wird als Ergebnis des Vergleichs das Bestehen einer oder keiner Ähnlichkeit zwischen der ersten Positionsinformation und den zweiten Positionsinformationen für jede der zweiten Positionsinformationen jeweils einzeln festgestellt. Anschließend kann beispielsweise die ähnlichste Positionsinformation bestimmt werden. Es ist auch denkbar, dass die ähnlichsten Positionsinformationen bestimmt werden, zum Beispiel wird für jeden Typ von Transporteinheiten die jeweils ähnlichste Positionsinformation bestimmt. Zum Beispiel kann für eine erste einem Brief zugeordnete Positionsinformation jeweils die ähnlichste zweite Positionsinformation bestimmt werden, die einem Transportbehälter und einem Transportfahrzeug zugeordnet sind. Dies ist insbesondere vorteilhaft, wenn die ähnlichen zweiten Positionsinformationen verschiedenen zweiten Transporteinheiten zugeordnet sind.

Das Vergleichen kann auch in Form eines iterativen Ausschlussverfahrens solange wiederholt werden, bis als Ergebnis des Vergleichs nur noch eine Ähnlichkeit zwischen der ersten Positionsinformation und einer von mehreren zweiten Positionsinformationen festgestellt wird. Zum Beispiel kann als Ergebnis eines ersten Vergleichs eine Ähnlichkeit zwischen der ersten Positionsinformation und mehreren zweiten, verschiedenen zweiten Transporteinheiten zugeordneten Positionsinformationen festgestellt werden. Anschließend kann eine weitere erste der ersten Transporteinheit zugeordnete Positionsinformation beispielsweise nur mit zweiten Positionsinformationen verglichen werden, die den verschiedenen zweiten Transporteinheiten zugeordnet sind. Dieses Verfahren kann solange durchgeführt werden, bis nur noch eine Ähnlichkeit zwischen einer ersten, der ersten Transporteinheit zugeordneten Positionsinformation, die für den zuletzt durchgeführten Vergleich herangezogen wurde, und einer zweiten Positionsinformation, die einer der verschiedenen zweiten Transporteinheiten zugeordnet ist, festgestellt wird. Dadurch wird die Anzahl der zu berücksichtigenden zweiten Positionsinformationen bzw. der in Frage kommenden zweiten Transporteinheiten nach und nach verringert. Dies ist ebenfalls vorteilhaft, wenn die ähnlichen zweiten Positionsinformationen verschiedenen zweiten Transporteinheiten zugeordnet sind.

Beim Vergleichen werden beispielsweise nur Positionsinformationen mit einem Zeitstempel als zweite Positionsinformationen berücksichtigt, der in einem definierten Zeitintervall um den Zeitstempel der ersten Positionsinformation liegt. Beispiele für ein solches definiertes Zeitintervall sind 1 Sekunde, 1 Minute, 5 Minuten, 1 Stunde, 12 Stunden, 1 Tag oder mehrere Tag. Es ist auch denkbar, dass beim Vergleichen beispielsweise jeweils nur die einer Transporteinheit oder einem Standort zugeordnete Positionsinformation mit dem jüngsten Zeitstempel als zweite Positionsinformation berücksichtigt wird. Dadurch wird bereits eine Vorauswahl in den verfügbaren Positionsinformationen getroffen, so dass beispielsweise die Anzahl der zweiten Positionsinformationen und somit die Rechenzeit für den eigentlichen Vergleich reduziert wird. Wenn die einer Transporteinheit oder einem Standort zugeordnete Positionsinformationen keinen Zeitstempel haben, werden beispielsweise alle oder keine der Positionsinformationen berücksichtigt.

Zum Beispiel kann während des Vergleichs der ersten Positionsinformation mit der zweiten Positionsinformation ein Ähnlichkeitsmaß bestimmt, zum Beispiel berechnet werden. Zum Beispiel wird ein Ähnlichkeitsmaß für eine oder mehrere der von den Positionsinformationen umfassten Größen bestimmt. Zum Beispiel wird ein Ähnlichkeitsmaß zumindest für die von den Positionsinformationen umfassten Positionen bestimmt. Beispiele für ein Ähnlichkeitsmaß sind Simple Matching, Hamman oder Tanimoto, Dice, Jaccard, Kulczynskl, Ochiai, Braun, Simpson, Sneath Kappa, Phi und Yule. Ein Ähnlichkeitsmaß hat üblicherweise einen Wert größer oder gleich 0 und kleiner oder gleich 1. Bei einem Ähnlichkeitsmaß mit dem Wert 0 besteht zum Beispiel keine Ähnlichkeit der verglichenen Größen. Bei einem Ähnlichkeitsmaß mit dem Wert 1 besteht zum Beispiel eine Übereinstimmung der verglichenen Größen. Eine Ähnlichkeit zwischen den verglichenen Positionsinformationen wird als Ergebnis des Vergleichs zum Beispiel festgestellt, wenn das Ähnlichkeitsmaß einen Schwellwert überschreitet. Andernfalls wird als Ergebnis des Vergleichs beispielsweise keine Ähnlichkeit zwischen den Positionsinformationen festgestellt. Der Schwellwert ist beispielsweise größer oder gleich 0,5, vorzugsweise liegt der Schwellwert bei 0,75 oder 0,9. Die ähnlichste Positionsinformation ist beispielsweise die Positionsinformation, für die sich das Ähnlichkeitsmaß mit dem größten Wert ergibt.

Weitere mögliche Verfahren, die beispielsweise eingesetzt werden können, um die Ähnlichkeit von Positionsinformationen und/oder ein Ähnlichkeitsmaß zu bestimmen, sind multivariante Verfahren der Clusteranalyse, zum Beispiel Ähnlichkeitsmessungen über hierarchische Verfahren, wie das Ward-Verfahren oder das Single Linage-Verfahren.

Die verglichenen Positionsinformationen sind beispielsweise ähnlich, wenn die von der ersten Positionsinformation umfassten Größen den von der zweiten Positionsinformation umfassten Größen ähnlich sind, insbesondere räumliche und/oder zeitlich ähnlich sind. Die verglichenen Positionsinformationen sind insbesondere ähnlich, wenn sich die von der ersten Positionsinformation umfasste Position zumindest in der Umgebung der von der zweiten Positionsinformation umfassten Position befindet und/oder die Zeitstempel der Positionsinformationen zumindest im Wesentlichen übereinstimmen, z.B. in einem Zeitintervall von 1 Sekunde, 1 Minute oder 5 Minuten liegen. Die Umgebung kann beispielweise ein Geofencing-Bereich sein. Die verglichenen Positionsinformationen sind vorzugsweise ähnlich, wenn die von der ersten Positionsinformation umfasste Position mit der von der zweiten Positionsinformation umfassten Position übereinstimmt. Andernfalls besteht beispielsweise keine Ähnlichkeit zwischen den verglichenen Positionsinformationen. Dies ist unter anderem vorteilhaft, um zu bestimmen, ob sich die erste Transporteinheit räumlich zumindest in der Nähe der zweiten Transporteinheit oder des Standorts befindet (oder befunden hat).

Um die Genauigkeit des Ergebnisses zu erhöhen, können beispielsweise weitere der ersten Transporteinheit oder der Einheit zur Erzeugung von Positionsinformationen und der zweiten Transporteinheit oder dem Standort zugeordnete Positionsinformationen - beispielsweise jeweils einzeln - verglichen werden, zum Beispiel erste und zweite Positionsinformationen mit einem jüngeren und/oder einem älteren Zeitstempel. Es kann zum Beispiel vorgeschrieben sein, dass zumindest zwei oder mehrere einzelne Vergleiche durchgeführt werden müssen, bevor als Ergebnis des Vergleichs eine oder keine Ähnlichkeit festgestellt wird. Dies ist unter anderem vorteilhaft, um ein falsches Ergebnis aufgrund einer zufälligen (einzelnen) Ähnlichkeit zu vermeiden. Anstelle eines Vergleichs lediglich einer ersten Positionsinformation mit einer zweiten Positionsinformation wird dann also ein Vergleich einer Vielzahl von ersten Positionsinformationen mit einer Vielzahl von zweiten Positionsinformationen vorgenommen. Alternativ ist es auch möglich, dass die Positionsinformationen jeweils auch mehr als eine räumliche Position umfassen, beispielsweise eine Vielzahl räumlicher Positionen, beispielsweise eine Vielzahl von zu unterschiedlichen Zeitpunkten (beispielsweise äquidistanten Zeitpunkten) eingenommenen räumlichen Positionen, beispielsweise in Form einer zurückgelegten oder geplanten Route. Jeder der räumlichen Positionen kann dann beispielsweise ein eigener Zeitstempel zugeordnet sein. Der Vergleich der ersten Positionsinformation mit der zweiten Positionsinformation beinhaltet dann inhärent den Vergleich zweier Gruppen von räumlichen Positionen (beispielsweise von zwei Routen oder Routenabschnitten).

Gemäß dem ersten Aspekt wird bei dem erfindungsgemäßen Verfahren dann, wenn als Ergebnis des Vergleichs (und/oder mehrerer einzelner Vergleiche) eine Ähnlichkeit festgestellt wird, die erste Transporteinheit mit der zweiten Transporteinheit assoziiert. Das Assoziieren soll dabei insbesondere als zumindest logisches Miteinanderinverbindungbringen der ersten Transporteinheit und der zweiten Transporteinheitverstanden werden. Dies ist unter anderem vorteilhaft, um automatisch eine logische Verbindung zwischen der ersten Transporteinheit und der zweiten Transporteinheit herzustellen, wenn sich die erste Transporteinheit zumindest in der Nähe der zweiten Transporteinheit befindet (oder befunden hat). Bisher musste diese Assoziierung der ersten Transporteinheit mit der zweiten Transporteinheit manuell erfolgen, was deutlich aufwändiger und fehleranfälliger war. Zum Beispiel kann die erste Positionsinformation als Ergebnis einer Suchanfrage eines Benutzers bei einem Sendungsverfolgungsdiensteanbieter betreffend die Position einer Sendung des Benutzers erhalten werden. Zum Beispiel ist die erste Positionsinformation der Sendung zugeordnet und umfasst die letzte bekannte Position der Sendung. Zum Beispiel ist die letzte bekannte Position der Sendung eine Scanposition an einer Verladerampe. Die erste Positionsinformation ist beispielsweise in einem Datensatz einer Sendungsverfolgungsdatenbank des Sendungsverfolgungsdiensteanbieters gespeichert. Zum Beispiel wird die erste Positionsinformation mit mehreren zweiten Positionsinformationen jeweils einzeln verglichen. Die zweiten Positionsinformationen sind beispielsweise jeweils einem Transportfahrzeug des für die Sendung verantwortlichen Logistikunternehmens zugeordnet und umfassen die Position des jeweiligen Transportfahrzeugs zum Verladezeitpunkt der Sendung. Die zweiten Positionsinformationen sind beispielsweise in einem Datensatz in einer Telematikdatenbank für Transportfahrzeuge gespeichert. Durch den Vergleich der ersten Positionsinformation mit jeder der zweiten Positionsinformationen kann in diesem Beispiel das Transportfahrzeug bestimmt werden, das sich zum Verladezeitpunkt der Sendung an der gleichen Verladerampe wie die Sendung befunden hat und in welches die Sendung somit verladen wurde. Dieses Transportfahrzeug kann dann automatisch mit der Sendung assoziiert werden. Zum Beispiel kann dem Benutzer als Ergebnis der Suchanfrage die letzte bekannte Position des Transportfahrzeugs als Position der Sendung ausgegeben werden. Zum Beispiel erzeugt das Transportfahrzeug in regelmäßigen oder in unregelmäßigen Abständen eine Positionsinformation mit der aktuellen Position des Transportfahrzeugs und sendet diese an den Server der Telematikdatenbank, so dass dem Benutzer als Ergebnis der Suchanfrage die letzte bekannte Position, beispielsweise die aktuelle Position des Transportfahrzeugs, als Position der Sendung ausgegeben wird. Dies stellt eine deutlich genauere Angabe der Position der Sendung als die Angabe der letzten Scanposition dar. Mit anderen Worten kann das Ergebnis der Suchanfrage betreffend die Sendung automatisch mit Informationen betreffend das Transportfahrzeug angereichert und an den Benutzer ausgegeben werden.

Des Weiteren kann die der Sendung zugeordnete Positionsinformation und/oder der der Sendung zugeordnete Datensatz mit der dem Transportfahrzeug zugeordneten Positionsinformation und/oder mit dem dem Transportfahrzeug zugeordneten Datensatz automatisch verknüpft werden. Zum Beispiel kann die der Sendung zugeordnete Positionsinformation auf die dem Transportfahrzeug zugeordnete Positionsinformation mit dem jeweils jüngsten Zeitstempel verweisen. Dies ist unter anderem vorteilhaft, um (automatisch) eine dauerhafte oder zumindest temporäre Verknüpfung zwischen den Informationen betreffend die Sendung herstellen zu können.

Außerdem ist der erste Aspekt beispielsweise vorteilhaft, wenn die Übermittlung der von einer Transporteinheit erzeugten Positionsinformationen durch eine andere Transporteinheit verhindert wird. Dies ist beispielsweise der Fall, wenn sich ein Container mit einem Positionssender im Bauch eines Schiffes befindet. Zum Beispiel stellt die Außenhülle des Schiffs dann einen Faradayschen Käfig dar, der verhindert, dass Positionsinformationen von dem Container über Funk übermittelt werden können. Durch einen Vergleich von Positionsinformationen des Containers und des Schiffs kann der Container automatisch mit dem Schiff assoziiert werden. Beispielsweise kann die jeweils aktuelle Positionsinformation des Schiffs bzw. der Datensatz des Schiffs mit dem Datensatz des Containers verknüpft werden.

Gemäß dem zweiten Aspekt kann zum Beispiel dann, wenn als Ergebnis des Vergleichs (und/oder mehrerer einzelner Vergleiche) keine Ähnlichkeit festgestellt wird, eine entsprechende Information ausgegeben werden. Die verglichenen Positionsinformationen (also die erste und die zweite Positionsinformation) können beispielsweise jeweils einer Transporteinheit aus einer Gruppe von Transporteinheiten zugeordnet sein. Eine Gruppe von Transporteinheiten kann beispielsweise durch die Transportfahrzeuge eines Konvois, ein Transportfahrzeug und einen oder mehrere von dem Transportfahrzeug transportierte Transportbehälter oder mehrere gemeinsam versendete (Einzel-) Sendungen gebildet werden. Der zweite Aspekt ist unter anderem vorteilhaft, um eine Überwachung zu erlauben, ob die Gruppe von Transporteinheiten räumlich getrennt (z.B. vereinzelt) wurde. Zum Beispiel kann der Vergleich der ersten Positionsinformation mit den zweiten Positionsinformationen automatisch durchgeführt werden, wenn sich die erste Positionsinformation verändert, zum Beispiel wenn die erste Positionsinformation aktualisiert wird. Zum Beispiel kann der für die Gruppe von Transporteinheiten verantwortliche Disponent automatisch benachrichtigt werden, wenn die Gruppe getrennt wurde.

Gemäß dem dritten Aspekt kann zum Beispiel in Abhängigkeit des Ergebnisses des Vergleichs (und/oder mehrerer einzelner Vergleiche) auf die Erzeugung der Positionsinformationen eingewirkt werden. Dies ist unter anderem vorteilhaft, um die Erzeugung von redundanten Positionsinformationen, beispielsweise durch Transporteinheiten, die zumindest vorübergehend eine räumliche Gruppe bilden, zumindest zu verringern. Transporteinheiten bilden beispielsweise eine räumliche Gruppe, wenn sie räumlich miteinander verbunden und oder räumlich assoziiert sind und/oder sich gleichartig bewegen oder gleichartig bewegen können, zum Beispiel wenn sie gemeinsam transportiert werden und/oder wenn eine Transporteinheit eine andere Transporteinheit transportiert, beispielsweise in sich aufnimmt oder auf oder an ihr befestigt wird.

Zum Beispiel kann die erste Positionsinformation einem Transportbehälter zugeordnet und in einem Datensatz in einer Telematikdatenbank gespeichert sein. Der Transportbehälter kann beispielsweise in regelmäßigen Zeitabständen eine Positionsinformation mit der aktuellen Position des Transportbehälters erzeugen und an den Server der Telematikdatenbank senden. Zum Beispiel kann die zweite Positionsinformation einem Transportfahrzeug zugeordnet und in einem Datensatz in einer weiteren Telematikdatenbank gespeichert sein. Das Transportfahrzeug kann beispielsweise ebenfalls in regelmäßigen Zeitabständen eine Positionsinformation mit der aktuellen Position des Transportbehälters erzeugen und an den Server der weiteren Telematikdatenbank senden. Durch den Vergleich der ersten Positionsinformation mit der zweiten Positionsinformation (oder vorzugsweise mehrerer einzelner Vergleiche der jeweils aktuellen ersten Positionsinformation mit der jeweils aktuellen zweiten Positionsinformation) kann in diesem Beispiel bestimmt werden, ob das Transportfahrzeug den Transportbehälter transportiert. Dies trifft zu, wenn als Ergebnis des Vergleichs (oder mehrerer einzelner Vergleiche) eine Ähnlichkeit festgestellt wird. In diesem Fall kann die Frequenz, mit der der Transportbehälter eine Positionsinformation erzeugt und an den Server der Telematikdatenbank sendet, zumindest verringert werden. Zum Beispiel kann der Server ein entsprechendes Signal an den Transportbehälter senden und beispielsweise den Positionssender des Transportbehälters anweisen, die Frequenz zu verringern.

Zum Beispiel kann der dem Transportbehälter zugeordnete Datensatz mit dem dem Transportfahrzeug zugeordneten Datensatz verknüpft werden. Die aktuelle Positionsinformation ist beispielsweise die Positionsinformation mit der letzten bekannten Position. Zum Beispiel kann der dem Transportbehälter zugeordnete Datensatz auf die aktuelle Positionsinformation des dem Transportfahrzeug zugeordneten Datensatzes verweisen. Dadurch ergeben sich durch die Verringerung der Frequenz keine Nachteile, da der dem Transportbehälter zugeordnete Datensatz mit der aktuellen Positionsinformation des Transportfahrzeugs angereichert wird.

Eine beispielhafte erfindungsgemäße Vorrichtung umfasst Mittel zur Ausführung des erfindungsgemäßen Verfahrens. Die Vorrichtung ist beispielsweise eine Datenverarbeitungsvorrichtung, zum Beispiel ein Server oder ein Client. Die Vorrichtung kann beispielsweise auch durch eine Rechnerwolke gebildet werden.

Eine beispielhafte erfindungsgemäße Vorrichtung umfasst zum Beispiel zumindest einen Prozessor und zumindest einen Speicher, wobei in dem Speicher ein Programm umfassend Programmanweisungen gespeichert ist, wobei der Speicher und das Programm eingerichtet sind, um, mit dem Prozessor, die Vorrichtung zumindest zu veranlassen, das erfindungsgemäße Verfahren auszuführen, wenn das Programm auf dem Prozessor ausgeführt wird. Die Vorrichtung ist beispielsweise softwaremäßig eingerichtet, um das Verfahren ausführen zu können. Unter softwaremäßig eingerichtet soll dabei insbesondere die Vorbereitung der Vorrichtung verstanden werden, die notwendig ist, um ein Verfahren beispielsweise in Form eines Programms auf dem Prozessor ausführen zu können.

Unter einem Prozessor sollen unter anderem eine oder mehrere Kontrolleinheiten, Mikroprozessoren, Mikrokontrolleinheiten wie Mikrocontroller, digitale Signalprozessoren (DSP), Anwendungsspezifische Integrierte Schaltungen (ASIC) oder Field Programmable Gate Arrays (FPGA) verstanden werden.

Ein Speicher ist beispielsweise ein Programmspeicher und/oder ein Hauptspeicher des Prozessors. Unter einem Programmspeicher soll unter anderem ein nicht-flüchtiger Speicher und unter einem Hauptspeicher ein flüchtiger oder ein nicht-flüchtiger Speicher, insbesondere ein Speicher mit wahlfreiem Zugriff (RAM) und/oder ein Flash-Speicher, verstanden werden. Nicht-flüchtige Speicher sind z.B. Speicher mit wahlfreiem Zugriff (RAM) wie z.B. NOR-Flash-Speicher oder mit sequentiellen Zugriff wie z.B. NAND-Flash-Speicher und/oder Speicher mit Nur-Lese-Zugriff (ROM) wie z.B. EPROM-, EEPROM-, oder ROM-Speicher. Der Speicher kann beispielsweise gegenständlich ausgebildet sein.

Ein beispielhaftes erfindungsgemäßes System umfasst eine oder mehrere Vorrichtungen mit Mitteln zur Ausführung des erfindungsgemäßen Verfahrens. Zum Beispiel umfasst das System eine oder mehrere erfindungsgemäße Vorrichtungen, oder eine oder mehrere Vorrichtungen (beispielsweise einen Server und einen Client), die zusammengenommen die erfindungsgemäßen Funktionen erbringen.

Ein beispielhaftes erfindungsgemäßes Programm umfasst Programmanweisungen, wobei die Programmanweisungen einen Prozessor zur Ausführung des erfindungsgemäßen Verfahrens veranlassen, wenn das Programm auf dem Prozessor ausgeführt wird. Ein Programm ist beispielsweise über ein Netzwerk wie ein lokales Netzwerk, ein Weitverkehrsnetzwerk, ein virtuelles Netzwerk, ein Funknetzwerk, eine Telefonnetzwerk und/oder das Internet verteilbar. Ein Programm kann zumindest teilweise Software und/oder Firmware eines Prozessors sein. Zum Beispiel ist das erfindungsgemäß Programm in einem Speicher der erfindungsgemäßen Vorrichtung gespeichert.

Ein beispielhaftes erfindungsgemäßes Speichermedium umfasst das erfindungsgemäße Programm. Das Speichermedium ist beispielsweise ein computerlesbares Speichermedium, welches das erfindungsgemäße Programm enthält und zum Beispiel als magnetisches, elektrisches, elektromagnetisches, optisches und/oder andersartiges Speichermedium ausgebildet ist. Das Speichermedium kann insbesondere ein physikalisches und/oder gegenständliches Speichermedium sein. Das Speichermedium ist beispielsweise tragbar oder in einer Vorrichtung fest installiert. "Computerlesbar" soll insbesondere so verstanden werden, dass das Speichermedium von einem Computer bzw. einer Datenverarbeitungsvorrichtung (aus)gelesen und/oder beschrieben werden kann, beispielsweise von einem Prozessor. Das Speichermedium ist beispielsweise ein Programmspeicher eines Prozessors.

Im Folgenden werden beispielhafte Ausführungsformen der vorliegenden Erfindung beschrieben, welche auf weitere beispielhafte Merkmale des erfindungsgemäßen Verfahrens, der erfindungsgemäßen Vorrichtung, des erfindungsgemäßen Systems, des erfindungsgemäßen Programms sowie des erfindungsgemäßen Speichermediums abstellen. Insbesondere sollen dabei durch die Beschreibung eines zusätzlichen Verfahrenschritts des erfindungsgemäßen Verfahrens auch als offenbart gelten Mittel zur Durchführung des Verfahrenschritts der erfindungsgemäßen Vorrichtung und eine entsprechende Programmanweisung des erfindungsgemäßen Programms. Das Gleiche soll auch für die Offenbarung eines Mittels zur Durchführung eines Verfahrensschritts oder einer Programmanweisung gelten, zum Beispiel soll die Offenbarung eines Mittels zur Durchführung eines Verfahrensschritts auch als Offenbarung des entsprechenden Verfahrensschritts und einer entsprechenden Programmanweisung verstanden werden.

Gemäß einer Ausführungsform der Erfindung umfasst das erfindungsgemäße Verfahren ferner das Erhalten der ersten Positionsinformation. Zum Beispiel wird die erste Positionsinformation als Ergebnis einer Suchanfrage eines Benutzers erhalten. Zum Beispiel wird die erste Positionsinformation von der ersten Transporteinheit erhalten. Zum Beispiel wird die erste Positionsinformation automatisch mit der zweiten Positionsinformation verglichen, sobald die erste Positionsinformation erhalten wird.

Gemäß einer Ausführungsform der Erfindung umfasst jede einer Transporteinheit zugeordnete Positionsinformation eine Position der Transporteinheit. Wie oben ausgeführt, kann die Position beispielsweise in Form von geographischen Breiten- und Längenangaben oder Positionskoordinaten angegeben werden. Beim Vergleichen der Positionsinformationen wird beispielsweise zumindest die von der ersten Positionsinformation umfasste Position mit der von der zweiten Positionsinformation umfassten Position verglichen. Dies ist unter anderem vorteilhaft, um zu bestimmen, ob sich die erste Transporteinheit (zumindest mit einer hohen Wahrscheinlichkeit) zumindest in der Nähe der zweiten Transporteinheit befindet (oder befunden hat).

Gemäß einer Ausführungsform der Erfindung umfasst jede einer Transporteinheit zugeordnete Positionsinformation ferner eine Geschwindigkeit, eine Durchschnittsgeschwindigkeit, eine Bewegungsrichtung, eine Genauigkeit der Positionsinformation und/oder einen Zeitstempel. Die Größen können beispielsweise von der Transporteinheit oder der Einheit zur Erzeugung von Positionsinformationen bestimmt werden, zum Beispiel gemessen werden. Die Position, Geschwindigkeit und Bewegungsrichtung kann beispielsweise in Form eines Geschwindigkeitsvektors in der Positionsinformation angegeben werden, wobei der Fußpunkt des Geschwindigkeitsvektors der Position, die Richtung des Geschwindigkeitsvektors der Bewegungsrichtung und die Länge des Geschwindigkeitsvektors der Geschwindigkeit entspricht.

Es ist auch möglich, dass die Größen zumindest teilweise nach dem Erzeugen der Positionsinformation bestimmt werden, zum Beispiel durch einen Datenbankserver und/oder beim Vergleichen der Positionsinformationen. Zum Beispiel kann durch den Zeitstempel zweier aufeinanderfolgender und einer Transporteinheit zugeordneter Positionsinformationen und den darin enthaltenen Positionsangaben eine Durchschnittsgeschwindigkeit der Transporteinheit berechnet werden. Nur aus den Positionsangaben kann beispielsweise eine Bewegungsrichtung der Transporteinheit ermittelt werden. Zum Beispiel können beim Vergleichen der Positionsinformationen neben der von der ersten Positionsinformation umfassten Position und der von der zweiten Positionsinformation umfassten Position weitere der genannten Größen miteinander verglichen werden. Die Genauigkeit der Positionsinformation kann beispielsweise bei einer Bewertung des Ähnlichkeitsmaßes und/oder bei der Bestimmung des Ähnlichkeitsmaßes berücksichtigt werden. Dies ist unter anderem vorteilhaft, um die Genauigkeit des Ergebnisses des Vergleichs, zum Beispiel des Ähnlichkeitsmaßes, zu erhöhen. Zum Beispiel kann als Ergebnis des Vergleichs von zwei Positionsinformationen, die zwei sich kreuzenden Transportfahrzeugen zugeordnet sind, eine (zufällige) Ähnlichkeit der Positionsinformationen festgestellt werden, wenn die verglichenen Positionsinformationen lediglich die aktuelle Position der Transportfahrzeuge umfassen. Dagegen kann als Ergebnis des Vergleichs keine Ähnlichkeit der Positionsinformationen festgestellt werden, wenn die verglichenen Positionsinformationen die aktuelle Position und die Bewegungsrichtung der Transportfahrzeuge umfassen. Außerdem kann der Zeitstempel der Positionsinformationen gerade bei solchen Transporteinheiten, die sich mit (hoher) Geschwindigkeit fortbewegen, ein wichtiges Kriterium für die Ähnlichkeit und/oder für die Bestimmung eines Ähnlichkeitsmaßes sein.

Gemäß einer Ausführungsform der Erfindung sind die erste und die zweite Positionsinformation ähnlich, wenn die von der ersten Positionsinformation umfasste Position in einer definierten Umgebung um die von der zweiten Positionsinformation umfasste Position liegt. Beispiele für eine definierte Umgebung ist beispielsweise ein kreisförmiges oder rechteckförmiges räumliches Gebiet, in dessen Zentrum die von der ersten Positionsinformation umfasste Position liegt. Der Durchmesser eines solchen Gebiets beträgt beispielsweise 1 Meter, 10 Meter, 20, Meter, 50 Meter, 100 Meter oder 500 Meter. Der Durchmesser (oder, im Falle eines rechteckförmigen Gebiets, z.B. die Kantenlänge) ist beispielsweise von der Genauigkeit der in den Positionsinformationen angegebenen Positionen abhängig. Die definierte Umgebung kann beispielweise ein Geofencing-Bereich sein. Dies ist unter anderem vorteilhaft, um zu bestimmen, ob sich die erste Transporteinheit oder die Einheit zur Erzeugung von Positionsinformationen (zumindest mit einer hohen Wahrscheinlichkeit) zumindest in der Nähe der zweiten Transporteinheit oder des Standorts befindet (oder befunden hat).

Gemäß einer Ausführungsform der Erfindung sind die erste und die zweite Positionsinformation ähnlich, wenn die von den Positionsinformationen umfassten Größen ähnlich, zum Beispiel statistisch signifikant ähnlich sind. Wie oben ausgeführt, kann während des Vergleichs der ersten Positionsinformation mit der zweiten Positionsinformation ein Ähnlichkeitsmaß für eine oder mehrere der von den Positionsinformationen umfassten Größen bestimmt werden.

Eine Ähnlichkeit zwischen den verglichenen Positionsinformationen wird als Ergebnis des Vergleichs zum Beispiel festgestellt, wenn das Ähnlichkeitsmaß einen Schwellwert überschreitet. Andernfalls wird als Ergebnis des Vergleichs beispielsweise keine Ähnlichkeit zwischen den Positionsinformationen festgestellt. Der Schwellwert ist beispielsweise größer oder gleich 0,5, vorzugsweise liegt der Schwellwert bei 0,75 oder 0,9. Es ist auch denkbar, dass andere oder zusätzliche statistische Methoden zur Bestimmung der Ähnlichkeit angewandt werden.

Gemäß einer Ausführungsform der Erfindung wird die erste Positionsinformation von einer Kontrolleinheit, der ersten Transporteinheit oder einer Einheit zur Erzeugung von Positionsinformationen erzeugt und/oder erhalten, und die zweite Positionsinformation wird von der zweiten Transporteinheit erzeugt und/oder erhalten. Die Kontrolleinheit ist beispielsweise eine mobile oder ortsfeste Scanposition. Sobald die erste Transporteinheit die Kontrolleinheit passiert, kann die Kontrolleinheit die erste Positionsinformation mit der Scanposition als Position der Transporteinheit erzeugen. Die erste Positionsinformation kann von der Kontrolleinheit an einen Server als aktuelle Positionsinformation gesendet und an dem Server empfangen werden. Alternativ kann die erste Positionsinformation mit der aktuellen Position der ersten Transporteinheit von der ersten Transporteinheit erzeugt werden, zum Beispiel von einem Positionssender der Transporteinheit. Die erste Positionsinformation kann von der ersten Transporteinheit als aktuelle Positionsinformation an den Server gesendet und an dem Server empfangen werden. Alternativ kann die erste Positionsinformation mit der aktuellen Position der Einheit zur Erzeugung von Positionsinformationen von dieser Einheit erzeugt werden. Die erste Positionsinformation kann von der der Einheit zur Erzeugung von Positionsinformationen als aktuelle Positionsinformation an den Server gesendet und an dem Server empfangen werden. Die zweite Positionsinformation mit der aktuellen Position der zweiten Transporteinheit kann von der zweiten Transporteinheit erzeugt werden, zum Beispiel von einem Positionssender der Transporteinheit. Die zweite Positionsinformation kann von der zweiten Transporteinheit als aktuelle Positionsinformation an den Server gesendet und an dem Server empfangen werden. Wie oben ausgeführt, kann die erste Positionsinformation zum Beispiel automatisch mit der zweiten Positionsinformation verglichen werden, sobald die erste Positionsinformation erhalten wird. Dies ist unter anderem vorteilhaft, um (automatisch) zu bestimmen, ob sich die erste Transporteinheit zumindest in der Nähe der zweiten Transporteinheit befindet (oder befunden hat).

Erfindungsgemäß ist der ersten Transporteinheit ein erster Datensatz und der zweiten Transporteinheit ein zweiter Datensatz zugeordnet, wobei jeder Datensatz zumindest eine Positionsinformation (z.B. zumindest die aktuelle Positionsinformation) der zugeordneten Transporteinheit umfasst.

Erfindungsgemäß umfasst das Assoziieren das zumindest teilweise Verknüpfen des ersten Datensatzes mit dem zweiten Datensatz. Dabei werden die Datensätze durch einen Verweis auf den jeweils anderen Datensatz (z.B. durch einen Zeiger, eine Datensatznummer oder eine Kennung) verknüpft oder zumindest teilweise in einem neuen Datensatz zusammengefasst. Das Verknüpfen der Datensätze ist unter anderem vorteilhaft, um bei einem Zugriff auf einen der Datensätze automatisch und schnell, insbesondere ohne erneute Ähnlichkeitsprüfung, auch auf den anderen Datensatz zugreifen zu können.

Die Datensätze können zum einen dauerhaft verknüpft werden. Dies ist zum Beispiel vorteilhaft, wenn die erste Transporteinheit und die zweite Transporteinheit dauerhaft eine räumliche Gruppe bilden. In diesem Fall muss der gegebenenfalls rechenintensive Vergleich nur einmal durchgeführt werden. Zum Beispiel kann der einem Kühlkofferaufbau eines LKWs zugeordnete Datensatz dauerhaft mit dem der Zugmaschine des LKWs zugeordneten Datensatz verknüpft werden. Der dem Kühlkofferaufbau zugeordnete Datensatz kann beispielsweise Informationen betreffend die Kühltemperatur umfassen. Der der Zugmaschine zugeordnete Datensatz kann beispielsweise Informationen betreffend die Geschwindigkeit, die geplante Route und den Verbrauch umfassen.

Zum anderen können die Datensätze temporär verknüpft werden. Zum Beispiel können die Datensätze nur solange verknüpft bleiben, wie die erste Transporteinheit und die zweite Transporteinheit eine räumliche Gruppe bilden. Wenn die erste Transporteinheit und die zweite Transporteinheit getrennt werden, kann die Verknüpfung beispielsweise rückgängig gemacht werden, vorzugsweise automatisch. Durch einen automatischen Vergleich der jeweils aktuellen ersten Positionsinformation mit der jeweils aktuellen zweiten Positionsinformation kann zum Beispiel überwacht werden, ob die erste Transporteinheit und die zweite Transporteinheit eine räumliche Gruppe bilden. Zum Beispiel kann überwacht werden, ob sich die erste Transporteinheit und die zweite Transporteinheit jeweils im selben Geofencing-Bereich befinden, zum Beispiel durch einen Vergleich von Geofencing-Angaben in den ersten und zweiten Positionsinformationen und/oder durch das Umwandeln von Positionsangaben in den ersten und/oder zweiten Positionsinformationen in Geofencing-Angaben.

Das Verknüpfen des ersten Datensatzes mit dem zweiten Datensatz dadurch, dass der erste Datensatz zumindest einen Verweis auf die zweite Positionsinformation umfasst, ist unter anderem vorteilhaft, um den ersten Datensatz mit der zweiten Positionsinformation anzureichern.

Gemäß einer Ausführungsform der Erfindung umfasst das erfindungsgemäße Verfahren ferner das Erhalten einer Suchanfrage eines Benutzers betreffend die erste Transporteinheit. In einer Client-Server-Architektur kann der Benutzer die Suchanfrage zum Beispiel an einem Client eingeben. Zum Beispiel wird die Suchanfrage von dem Client an einen Server des Sendungsverfolgungsdiensteanbieters gesendet und dort empfangen. Die Suchanfrage kann beispielsweise die letzte bekannte Position der ersten Transporteinheit betreffen. Die Suchanfrage kann beispielsweise trunkiert sein. Zum Beispiel gibt der Benutzer die trunkierte Suchanfrage "12345*" ein. Das "*" in der trunkierten Suchanfrage ist ein Platzhalterzeichen für beliebig viele weitere Zeichen. Die Suchanfrage "12345*" trifft somit beispielsweise auf die folgenden Zeichenfolgen zu: "123450", "12345ABC" und "123456789".

Gemäß einer Ausführungsform der Erfindung umfasst das erfindungsgemäße Verfahren ferner das Anreichern von Informationen betreffend die erste Transporteinheit mit Informationen betreffend die zweite Transporteinheit, wenn als Ergebnis des Vergleichs eine Ähnlichkeit zwischen der ersten und der zweiten Positionsinformation festgestellt wird, und das Ausgeben der angereicherten Informationen betreffend die erste Transporteinheit als Ergebnis der Suchanfrage. Die Informationen betreffend die erste Transporteinheit sind beispielsweise in dem ersten Datensatz und die Informationen betreffend die zweite Transporteinheit in dem zweiten Datensatz gespeichert. Die angereicherten Informationen werden in der Client-Server-Architektur beispielsweise von dem Server des Sendungsverfolgungsdiensteanbieters zur Anzeige auf dem Client bereitgestellt, zum Beispiel an den Client gesendet und dem Benutzer auf dem Client angezeigt.

Das Anreichern ist unter anderem vorteilhaft, um weitere für die Suchanfrage gegebenenfalls relevante Informationen als Ergebnis der Suchanfrage auszugeben. Zum Beispiel werden dem Benutzer als Ergebnis der Suchanfrage neben den Informationen betreffend die erste Transporteinheit weitere Informationen betreffend die zweite Transporteinheit ausgegeben. Beispielsweise ist die zweite Transporteinheit eine Zugmaschine eines LKWs mit einem Kühlkofferaufbau. Als Ergebnis der Suchanfrage können beispielsweise Informationen betreffend die Zugmaschine, wie die Geschwindigkeit und der Verbrauch, und Informationen betreffend den Kühlkofferaufbau, wie die Kühltemperatur, ausgegeben werden.

Des Weiteren ist das Anreichern unter anderem vorteilhaft, um die Genauigkeit des Ergebnisses der Suchanfrage zu verbessern. Wie oben ausgeführt, kann als Ergebnis einer Suchanfrage betreffend eine Sendung beispielsweise die aktuelle Position des Transportfahrzeugs als Position der Sendung ausgegeben werden, statt der ungenaueren Angabe der letzten Scanposition der Sendung.

Gemäß einer Ausführungsform der Erfindung ist die erste Transporteinheit eine Sendung, wobei die zweite Transporteinheit ein Transportbehälter oder ein Transportfahrzeug für die Sendung ist, und wobei die Informationen betreffend die Sendung mit Telematikinformationen betreffend den Transportbehälter oder das Transportfahrzeug angereichert werden. Beispiele für Telematikinformationen sind Betriebsgrößen wie die Geschwindigkeit, die Durchschnittsgeschwindigkeit, der Verbrauch, die Luftfeuchtigkeit, die Kühltemperatur, die Außentemperatur, die Startadresse, die Zieladresse, die geplante Route und die Beladung. Die Telematikinformationen sind beispielsweise in dem zweiten Datensatz gespeichert.

Gemäß einer Ausführungsform der Erfindung umfasst das erfindungsgemäße Verfahren ferner das Anzeigen eines Kartenausschnitts für den Benutzer. Zum Beispiel wird dem Benutzer der Kartenausschnitt auf einer Benutzer-Datenverarbeitungsvorrichtung angezeigt. Der Kartenausschnitt kann zum Beispiel auf der Benutzer-Datenverarbeitungsvorrichtung gespeichert sein, zum Beispiel als anzeigbare Grafik. In der Client-Server-Architektur kann der Kartenausschnitt dem Benutzer zum Beispiel auf einem Client angezeigt werden. Zum Beispiel kann dem Client der Kartenausschnitt von einem Server eines Kartendiensteanbieters und/oder des Sendungsverfolgungsdiensteanbieters zur Anzeige bereitgestellt werden, zum Beispiel als anzeigbare Grafik. Der Kartenausschnitt kann von dem Benutzer durch eine Benutzereingabe beispielsweise ausgewählt und/oder verändert werden.

Unter einem Kartenausschnitt soll insbesondere eine grafische Darstellung eines Teils der Erdoberfläche verstanden werden, vorzugsweise eine maßstabsgetreue Darstellung. Ein Kartenausschnitt beinhaltet beispielsweise zumindest eine lagerichtige Darstellung eines Teils der auf dem Teil der Erdoberfläche befindlichen geographischen Objekte, wie Straßen, Bahnlinien, größere Gebäude, die Umrisse von Ortschaften und/oder andere technische Sachverhalte, wie (politische) Grenzen, Wasser- oder Stromleitungen. Beispiele für Kartenausschnitte sind Straßenkarten, nautische Karten und topographische Karten.

Gemäß einer Ausführungsform der Erfindung werden die angereicherten Informationen auf dem Kartenausschnitt an der von der ersten und/oder zweiten Positionsinformation umfassten Position angezeigt. Die Informationen können auch in einem entsprechenden Geofencing-Bereich angezeigt werden, zum Beispiel im Zentrum des Geofencing-Bereichs. Zum Beispiel wird ein der ersten oder zweiten Transporteinheit entsprechendes Piktogramm an der Position angezeigt. Beispiele für mögliche Piktogramme sind ein Lkw-Piktogramm, ein Schiff-Piktogramm, ein Container-Piktogramm, ein Wechselbrücken-Piktogramm, ein Brief-Piktogramm, ein Zug-Piktogramm, ein Flugzeug-Piktogramm und/oder ein Paket-Piktogramm. Zum Beispiel kann als Ergebnis einer Suchanfrage betreffend eine Sendung beispielsweise ein dem Transportfahrzeug entsprechendes Piktogramm an der letzten bekannten Position des Transportfahrzeugs auf dem Kartenausschnitt angezeigt werden. Dadurch erhält der Benutzer automatisch die Information, wo sich die Sendung zurzeit befindet und wie sie transportiert wird.

Neben einem Piktogramm können beispielsweise weitere Informationen angezeigt werden und/oder zur Anzeige aktivierbar sein, zum Beispiel durch eine Benutzereingabe. Zum Beispiel wird die Anzeige der Informationen in regelmäßigen Abständen aktualisiert, so dass auch eine Bewegung der Transporteinheiten darstellbar ist. Die vorhergehenden Positionen können beispielsweise ebenfalls angezeigt werden und/oder zur Anzeige aktivierbar sein, zum Beispiel durch eine Benutzereingabe. Die geplante Route kann beispielsweise ebenfalls angezeigt werden und/oder zur Anzeige aktivierbar sein, zum Beispiel durch eine Benutzereingabe. Dies ist unter anderem vorteilhaft, um eine übersichtliche und benutzerfreundliche Ausgabe der Informationen zu ermöglichen.

Gemäß einer Ausführungsform der Erfindung umfasst das erfindungsgemäße Verfahren ferner das Ermitteln und/oder Ausgeben von weiteren für die erste Transporteinheit relevanten Informationen als Ergebnis der Suchanfrage und/oder das Ausgeben von weiteren für die zweite Transporteinheit relevanten Informationen als Ergebnis der Suchanfrage, wenn als Ergebnis des Vergleichs eine Ähnlichkeit zwischen der ersten und der zweiten Positionsinformation festgestellt wird.

Zum Beispiel werden relevante Verkehrs-, Wetter-, Flughafen und/oder Seehafeninformationen ausgegeben, zum Beispiel auf dem Kartenausschnitt angezeigt. Das Auswählen der weiteren Informationen kann beispielsweise in Abhängigkeit von Eigenschaften der ersten und/oder zweiten Transporteinheit oder des Standorts erfolgen, zum Beispiel in Abhängigkeit des Typs. Das Auswählen und Ausgeben der weiteren Informationen kann beispielsweise automatisch erfolgen. Das Auswählen und Ausgeben der weiteren Informationen kann beispielsweise aufgrund einer Benutzereingabe erfolgen, zum Beispiel kann der Benutzer auswählen, dass relevante Verkehrsinformationen angezeigt werden sollen.

Verkehrsinformationen sind zum Beispiel relevant, wenn zumindest eine der Positionsinformationen einem LKW zugeordnet ist. Zum Beispiel können in diesem Fall nur Verkehrsinformationen für die geplante Route des LKWs ausgegeben werden. Wetterinformationen sind zum Beispiel insbesondere relevant, wenn zumindest eine der Positionsinformationen einem Schiff zugeordnet ist. Zum Beispiel können in diesem Fall nur Wetterinformationen für die geplante Route des Schiffs ausgegeben werden. Des Weiteren können in diesem Fall beispielsweise Seehafeninformationen, (z.B. Umschlagdauer, freie Liegeplätze u.ä.) für den geplanten Zielhafen des Schiffs ausgewählt und angezeigt werden. Dadurch werden dem Benutzer nur weitere Informationen angezeigt, die für ihn zumindest mit einer hohen Wahrscheinlichkeit von Interesse sind. Dies ist unter anderem vorteilhaft, um den notwendigen Datenverkehr zu reduzieren und zum Beispiel in einer Client-Server-Architektur den Einsatz von Clients mit einer langsamen Netzwerkverbindung zu ermöglichen. Auch kann das Bereitstellen von weiteren Informationen kostenpflichtig, zeitintensiv und/oder rechenintensiv sein.

Gemäß einer Ausführungsform der Erfindung umfasst das erfindungsgemäße Verfahren ferner das Verringern einer Frequenz, mit der die erste und/oder zweite Positionsinformation erzeugt wird, wenn als Ergebnis des Vergleichs eine Ähnlichkeit zwischen der ersten und der zweiten Positionsinformation festgestellt wird, und/oder das Erhöhen der Frequenz, wenn als Ergebnis des Vergleichs keine Ähnlichkeit zwischen der ersten und der zweiten Positionsinformation festgestellt wird. Dies ist unter anderem vorteilhaft, um die Erzeugung von redundanten Positionsinformationen beispielsweise durch Transporteinheiten, die eine räumliche Gruppe bilden, zumindest zu verringern. Außerdem kann dadurch die Batterie der Transporteinheiten geschont werden.

Zum Beispiel kann die Frequenz, mit der die erste Positionsinformation erzeugt wird, solange verringert werden, wie die erste Transporteinheit und die zweite Transporteinheit eine räumliche Gruppe bilden. Sobald die die erste Transporteinheit und die zweite Transporteinheit getrennt werden, kann die Frequenz, mit der die erste Positionsinformation erzeugt wird, beispielsweise erhöht werden. Durch einen automatischen Vergleich der jeweils aktuellen ersten Positionsinformation mit der jeweils aktuellen zweiten Positionsinformation kann zum Beispiel überwacht werden, ob die die erste Transporteinheit und die zweite Transporteinheit eine räumliche Gruppe bilden. Zum Beispiel kann überwacht werden, ob sich die erste Transporteinheit und die zweite Transporteinheit jeweils im selben Geofencing-Bereich befinden.

Gemäß einer Ausführungsform der Erfindung ist die erste Transporteinheit eine erste Einzelsendung und die zweite Transporteinheit eine zweite Einzelsendung, wobei die erste Einzelsendung und die zweite Einzelsendung gemeinsam versendet werden (d.h. als gemeinsame Sendung versendet werden sollen), und wobei ein Vereinzelungsalarm ausgegeben wird, wenn als Ergebnis des Vergleichs keine Ähnlichkeit zwischen der ersten und der zweiten Positionsinformation festgestellt wird.

Gemäß einer Ausführungsform der Erfindung umfasst das erfindungsgemäße System eine oder mehrere Datenquellen, und/oder eine oder mehrere Datenschnittstellen zum Zugriff auf die Datenquellen. Beispiele für Datenquellen sind eine oder mehrere (transporteinheiteneigene) Positionssender, ortsfeste oder mobile Kontrollstationen und Datenbanken, wie Positionsdatenbanken, Telematikdatenbanken, Fuhrparkdatenbanken, Sendungsverfolgungsdatenbanken und Logistikdatenbanken.

Gemäß einer Ausführungsform der Erfindung umfasst die erfindungsgemäße Vorrichtung eine Netzwerkschnittstelle zur Verbindung mit einem Netzwerk. Eine Netzwerkschnittstelle ist beispielsweise eine kabelgebundene Netzwerkschnittstelle, wie eine Ethernet-Netzwerkschnittstelle oder ein DSL-Modem, oder eine kabellose Netzwerkschnittstelle, wie eine UMTS-Netzwerkschnittstelle oder eine IEEE 802.11-Netzwerkschnittstelle. Das Netzwerk ist beispielsweise ein lokales Netzwerk, ein Weitverkehrsnetzwerk, ein virtuelles Netzwerk, ein Funknetzwerk, eine Telefonnetzwerk und/oder das Internet.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als zwingend notwendiger Bestandteil der vorliegenden Erfindung erachtet werden.

### Kurze Beschreibung der Zeichnungen

In den Figuren zeigen:
Fig. 1: ein Blockdiagramm einer beispielhaften Ausführungsform eines erfindungsgemäßen Systems;
Fig. 2a und 2b: ein Blockdiagramm einer beispielhaften Ausführungsform eines Servers und eines Clients;
Fig. 3a bis 3c: Ablaufdiagramme mit Verfahrensschritten von Verfahren gemäß dem ersten, zweiten und dritten Aspekt; und
Fig. 4a bis 4f: schematische Darstellungen eines auf einer Anzeigeeinheit des Clients angezeigten Kartenausschnitts;
Fig. 5: ein Blockdiagramm einer beispielhaften Ausführungsform eines erfindungsgemäßen Speichermediums.

### Detaillierte Beschreibung einiger beispielhafter Ausführungsformen der Erfindung

Die vorliegende Erfindung wird im Folgenden anhand von beispielhaften Ausführungsformen beschrieben.

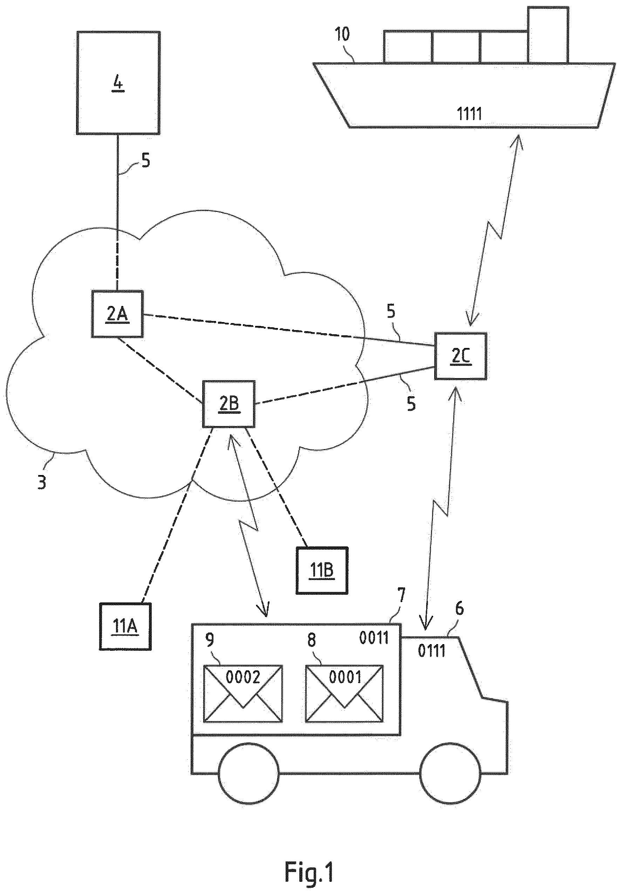

Fig. 1 zeigt ein Blockdiagramm einer beispielhaften Ausführungsform eines erfindungsgemäßen Systems 1. System 1 umfasst unter anderem Server 2A, 2B und 2C.

Server 2A ist ein Anwendungsserver eines Sendungsverfolgungsdiensteanbieters und stellt einen Sendungsverfolgungsdienst für einen oder mehrere Benutzer bereit. Server 2B ist ein Datenbankserver des Sendungsverfolgungsdiensteanbieters und stellt eine Sendungsverfolgungsdatenbank mit Sendungsverfolgungsdatensätzen für die Benutzer des Sendungsverfolgungsdienstes bereit. Server 2A und 2B sind Teil einer Rechnerwolke 3. Rechnerwolke 3 kann neben Server 2A und 2B weitere Server beispielsweise zum Bereitstellen des Sendungsverfolgungsdienstes und/oder weiterer Dienste umfassen. Ein weiterer Dienst ist beispielsweise ein Routenplanungssystem.

Server 2C ist ein Datenbankserver eines vom Sendungsverfolgungsdiensteanbieters verschiedenen Telematikdiensteanbieters und stellt eine Telematikdatenbank mit Telematikdatensätzen für einen oder mehrere Benutzer bereit.

Client 4 gehört einem Benutzer des Sendungsverfolgungsdienstes und des Telematikdienstes und ist über ein Netzwerk 5 zumindest mit Server 2A und/oder Rechnerwolke 3 verbunden. Client 3 ist vorzugsweise ein Personalcomputer, ein tragbarer Computer oder ein Thin-Client.

Server 2C ist ebenfalls über das Netzwerk 5 zumindest mit Server 2A und/oder Rechnerwolke 3 verbunden. Das Netzwerk 5 ist vorzugsweise das Internet.

Des Weiteren umfasst das System 1 eine Zugmaschine 6, einen Container 7, einen Brief 8 und 9, eine Scanposition 11A und 11B und ein Containerschiff 10.

Der Zugmaschine 6 und dem Schiff 10 ist jeweils ein Telematikdatensatz in der Telematikdatenbank auf dem Server 2C zugeordnet. Sowohl die Zugmaschine 6 als auch das Schiff 10 erzeugen in regelmäßigen Abständen (die Zugmaschine 6 zweimal in der Minute und das Schiff 10 einmal in der Stunde) Positionsinformationen mit der jeweiligen aktuellen Position, der aktuellen Geschwindigkeit und einem Zeitstempel und senden die Positionsinformation über eine kabellose Verbindung an den Server 2C, zum Beispiel über eine Funkverbindung. Die Positionsinformation des Schiffs 10 ist beispielsweise eine Automatic Identification System (AIS) Information und umfasst alle entsprechenden Größen. Die Positionsinformationen werden in dem der Zugmaschine 6 oder dem Schiff 10 zugeordneten Telematikdatensatz gespeichert.

Dem Container 7, dem Brief 8 und dem Brief 9 ist beispielsweise jeweils ein Sendungsverfolgungsdatensatz in der Sendungsverfolgungsdatenbank auf dem Server 2B zugeordnet. Der Container 7 erzeugt in regelmäßigen Abständen (zweimal in der Stunde) Positionsinformationen mit der jeweiligen aktuellen Position und einem Zeitstempel und sendet die Positionsinformation über eine kabellose Verbindung an den Server 2B, zum Beispiel über eine Funkverbindung. Der Container 7 befindet sich auf dem Anhänger der Zugmaschine 6. Für die Briefe werden an den Scanpositionen 11A und 11B Positionsinformationen mit der jeweiligen Scanposition erzeugt und an den Server 2B über das Netzwerk 5 gesendet, sobald ein Brief die Scanpositionen passiert. Zum Beispiel wird ein Barcode auf dem Brief automatisch oder manuell gescannt, wenn er eine Scanposition passiert, zum Beispiel beim Verladen in den Container 7. Die Scanpositionen sind jeweils an Verladerampen angeordnet. Die Positionsinformationen werden in dem dem Container 7, dem Brief 8 oder dem Brief 9 zugeordneten Sendungsverfolgungsdatensatz gespeichert.

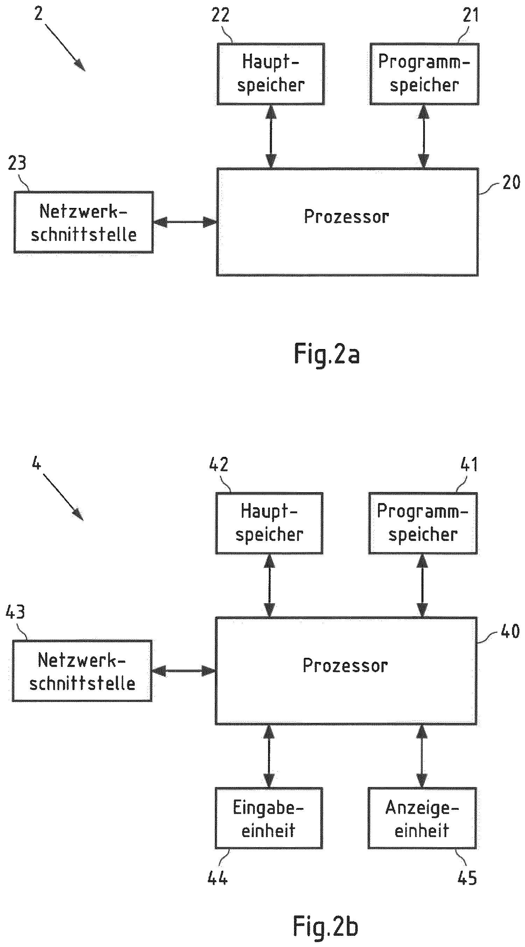

Fig. 2a zeigt ein Blockdiagramm einer beispielhaften Ausführungsform des Servers 2A. Server 2A ist eine beispielhafte Ausführungsform einer erfindungsgemäßen Vorrichtung.

Prozessor 20 von Server 2A führt Programmanweisungen aus, die in Programmspeicher 21 gespeichert sind, und speichert beispielsweise Zwischenergebnisse oder ähnliches in Hauptspeicher 22.

Außerdem steuert Prozessor 20 Netzwerkschnittstelle 23, über welche sich Server 2A mit dem Netzwerk 5 verbinden kann.

Des Weiteren kann Server 2A über weitere Einheiten verfügen, wie beispielsweise eine Ein- und/oder Ausgabeeinheit z.B. eine Tastatur, eine Maus, eine Anzeigeeinheit (z.B. ein LCD-Display und/oder LED Leuchtanzeigen), ein Mikrofon, eine berührungsempfindliche Anzeigeeinheit, einen Lautsprecher, einen biometrischen Sensor (z.B. ein Fingerabdruck-Sensor) und/oder eine Kamera.

Das Blockdiagramm einer beispielhaften Ausführungsform des Servers 2B und/oder des Servers 2C kann dem Blockdiagramm der beispielhaften Ausführungsform des Servers 2A entsprechen. Die Server 2B und 2C sind insbesondere eingerichtet, um eine große Anzahl von Datensätzen speichern und verwalten zu können. Dazu weisen die Server 2B und 2C beispielsweise einen umfangreichen Speicher auf. Des Weiteren können die Server 2B und 2C weitere Netzwerkschnittstellen, zum Beispiel Funknetzwerkschnittstellen zur Verbindung mit dem Schiff 10, der Zugmaschine 6 oder dem Container 7 aufweisen.

Fig. 2b zeigt ein Blockdiagramm einer beispielhaften Ausführungsform des Clients 4.

Prozessor 40 von Client 4 führt Programmanweisungen aus, die in Programmspeicher 41 gespeichert sind, und speichert beispielsweise Zwischenergebnisse oder ähnliches in Hauptspeicher 42. Außerdem steuert Prozessor 40 Netzwerkschnittstelle 43, über welche sich Client 4 mit dem Netzwerk 5 (siehe Fig. 1) verbinden kann.

Client 4 umfasst ferner eine Eingabeeinheit 44 und eine Anzeigeeinheit 45. Eingabeeinheit 44 kann beispielsweise Benutzereingaben aufnehmen und an Prozessor 40 weiterleiten. Anzeigeeinheit 45 kann Informationen für den Benutzer von Prozessor 40 empfangen und ausgeben. Eingabeeinheit 44 ist vorzugsweise eine Maus und/oder Tastatur, und Anzeigeeinheit 45 ist vorzugsweise ein Monitor.

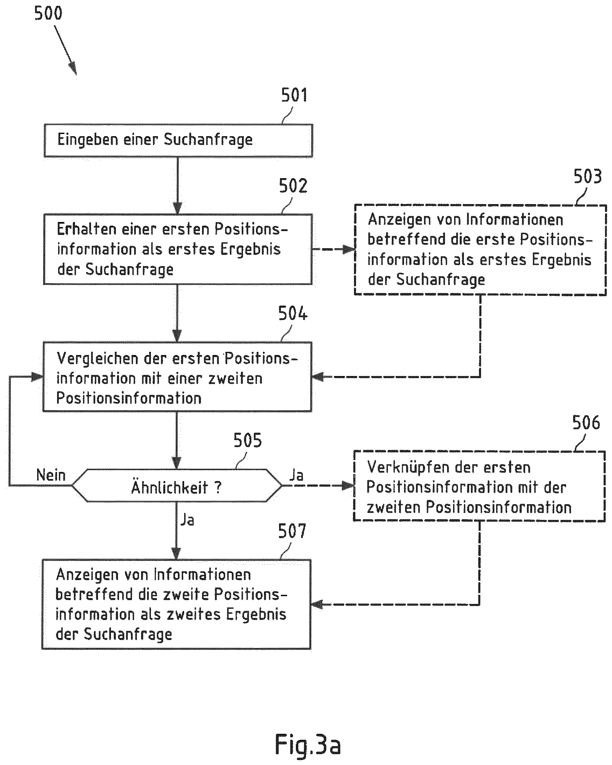

In Fig. 3a bis 3c sind Ablaufdiagramme 500, 600 und 700 mit Verfahrensschritten von Verfahren gemäß dem ersten, zweiten und dritten oben bereits eingeführten Aspekt dargestellt. Die Schritte in den Ablaufdiagrammen, die von einem Programm ausgeführt werden können, sollen insbesondere derart verstanden werden, dass ein Programm entsprechende Programmanweisungen enthält, die eine Vorrichtung, auf deren Prozessor das Programm ausgeführt wird, dazu veranlassen, einen entsprechenden Schritt auszuführen. Der Prozessor kann zur Ausführung eines Schrittes zum Beispiel ein oder mehrere entsprechende Mittel (an)steuern. Die Verfahrensschritte der Ablaufdiagramme können dabei lediglich von einer Vorrichtung ausgeführt werden, oder von mehreren Vorrichtungen (die Verfahrensschritte und/oder Programmanweisungen werden dann also auch von den jeweiligen Prozessoren der Vorrichtungen ausgeführt).

In Fig. 3a ist ein Ablaufdiagramm 500 dargestellt. Das Ablaufdiagramm 500 verwirklicht unter anderem den ersten Aspekt, der beispielsweise einen verbesserten Sendungsverfolgungsdienst für einen oder mehrere Benutzer verwirklicht.

In einem Schritt 501 gibt ein Benutzer eine Suchanfrage ein. Die Benutzereingabe erfolgt über die Eingabeeinheit 44 des Clients 4. Zum Beispiel gibt der Benutzer die Trackingnummer "0001" des Briefs 8 als Suchanfrage ein. Es ist auch denkbar, dass der Benutzer eine trunkierte Suchanfrage eingibt, zum Beispiel "000*". Der Client sendet die Suchanfrage an den Server 2A des Sendungsverfolgungsdiensteanbieters. Der Server 2A sendet die Suchanfrage an den Server 2B.

Der Server 2B arbeitet die Suchanfrage ab und sendet eine oder mehrere Positionsinformation, auf die die Suchanfrage zutrifft, an den Server 2A. Die Suchanfrage trifft auf eine Positionsinformation beispielsweise zu, wenn sie einer Transporteinheit zugeordnet ist, auf deren Kennung (z.B. Trackingnummer) die Suchanfrage zutrifft. Außerdem kann die Suchanfrage beispielsweise automatisch auf die einer Transporteinheit zugeordneten Positionsinformation mit dem jüngsten Zeitstempel beschränkt sein.

Die oben genannte Suchanfrage "0001" trifft zum Beispiel nur auf die Positionsinformationen des Briefs 8 mit dem jüngsten Zeitstempel zu. Die trunkierte Suchanfrage "000*" trifft zumindest auf Positionsinformationen der Briefe 8 und 9 mit dem jeweils jüngsten Zeitstempel zu. Wenn die Suchanfrage des Benutzers auf mehrere Positionsinformationen zutrifft, senden die Server alle entsprechenden Positionsinformationen an den Server 2A. Wenn mehrere Positionsinformationen an den Server 2A gesendet werden, werden die folgenden Schritte 502 bis 507 beispielsweise für jede der Positionsinformationen einzeln durchgeführt.

Es ist auch denkbar, dass statt der Positionsinformationen die Datensätze, die die Positionsinformationen umfassen, zumindest teilweise an den Server 2A gesendet werden. Für die oben genannten Suchanfrage "0001" sendet der Server 2B zum Beispiel den dem Brief 8 zugeordneten Sendungsverfolgungsdatensatz an den Server 2A. In dem Sendungsverfolgungsdatensatz ist die Positionsinformation mit der letzten Scanposition des Briefs 8 gespeichert. Die letzte Scanposition des Briefs 8 ist Scanposition 11A.

In einem Schritt 502 erhält der Server 2A eine erste Positionsinformation als erstes Ergebnis der Suchanfrage des Benutzers. Die erste Positionsinformation ist eine von dem Server 2B erhaltene Positionsinformation. Zum Beispiel ist die erste Positionsinformation die Positionsinformation mit der letzten Scanposition des Briefs 8.

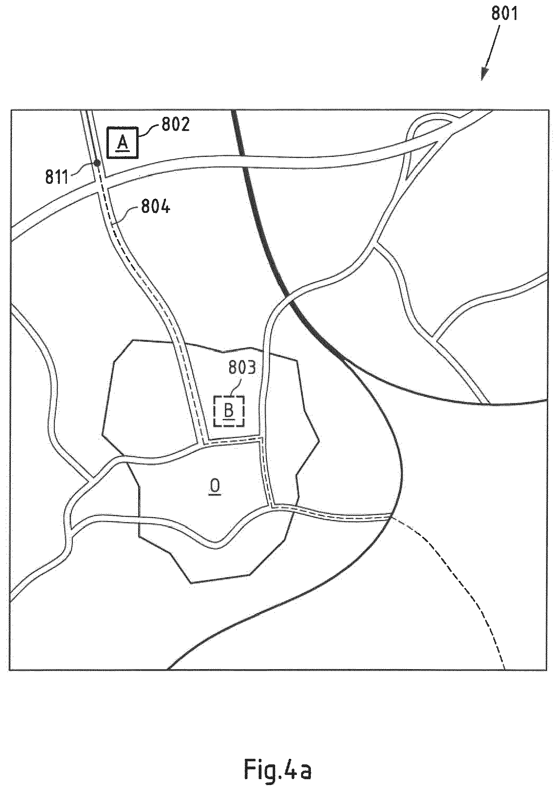

Anschließend kann der Server 2A Informationen betreffend die erste Positionsinformation als erstes Ergebnis der Suchanfrage des Benutzers erzeugen und diese an den Client 4 senden. Zum Beispiel erzeugt der Server 2A die Informationen aus dem dem Brief 8 zugeordneten Sendungsverfolgungsdatensatz und sendet diese an den Client 4. In einem optionalen Schritt 503 werden die Informationen betreffend die erste Positionsinformation dem Benutzer auf dem Client 4 als erstes Ergebnis der Suchanfrage des Benutzers angezeigt. Zum Beispiel werden dem Benutzer die Informationen auf einem Kartenausschnitt an der in der ersten Positionsinformation umfassten Position angezeigt. Zum Beispiel wird dem Benutzer als Ergebnis der oben genannten Suchanfrage die in Fig. 4a dargestellte und unten erläuterte Anzeige auf der Anzeigeeinheit 45 des Clients 4 angezeigt.

Anschließend wird die erste Positionsinformation mit einer zweiten Positionsinformation in einem Schritt 504 verglichen.

Dazu sendet der Server 2A automatisch eine weitere Suchanfrage betreffend weitere für die Suchanfrage relevante Positionsinformationen an den Server 2B und/oder 2C. Zum Beispiel beschränkt der Server 2A die automatische Suchanfrage auf einen der Server und/oder auf Positionsinformationen mit einem Zeitstempel in einem definierten Zeitintervall um den Zeitstempel der ersten Positionsinformation.

Wenn die Positionsinformation mit der letzten Scanposition des Briefs 8 die erste Positionsinformation ist, sendet der Server 2A beispielsweise eine automatische Suchanfrage betreffend alle weiteren Positionsinformationen mit einem Zeitstempel in einem Zeitintervall von 5 Minuten um den letzten Scanzeitpunkt des Briefs 8 an den Server 2B. An den Server 2C sendet der Server 2A in diesem Fall beispielsweise keine Suchanfrage, weil die Scanposition 11A an einer Containerverladerampe angeordnet ist und nur in der Sendungsverfolgungsdatenbank auf Server 2B Containern zugeordnete Sendungsverfolgungsdatensätze gespeichert sind.

Der Server 2B und/oder 2C arbeitet die Suchanfrage ab und sendet alle weiteren Positionsinformationen, auf die die Suchanfrage zutrifft, an den Server 2A. Es ist auch denkbar, dass statt der weiteren Positionsinformationen die vollständigen Datensätze an den Server 2A gesendet werden.

Die zweite Positionsinformation ist eine von dem Servern 2B und/oder 2C als Ergebnis der automatischen Suchanfrage empfangene weitere Positionsinformation. Wenn mehrere weitere Positionsinformationen an den Server 2A gesendet werden, wird beispielsweise jeder der weiteren Positionsinformationen einzeln mit der ersten Positionsinformation verglichen. Anschließend kann beispielsweise die ähnlichste zweite Positionsinformation bestimmt werden.

In einem Schritt 505 wird als Ergebnis des Vergleichs der ersten Positionsinformation mit der zweiten Positionsinformation von dem Server 2A festgestellt, ob die erste Positionsinformation und die zweite Positionsinformation ähnlich sind. Die erste Positionsinformation und die zweite Positionsinformation sind ähnlich, wenn sich die von der ersten Positionsinformation umfasste Position zumindest mit einer hohen Wahrscheinlichkeit zumindest in der Umgebung der von der zweiten Positionsinformation umfassten Position befindet. Zum Beispiel berechnet der Server 2A ein Ähnlichkeitsmaß für die von der ersten Positionsinformation und der zweiten Positionsinformation umfassten Größen. Eine Ähnlichkeit zwischen den verglichenen Positionsinformationen wird als Ergebnis des Vergleichs zum Beispiel festgestellt, wenn das Ähnlichkeitsmaß einen Schwellwert überschreitet. Andernfalls wird als Ergebnis des Vergleichs beispielsweise keine Ähnlichkeit zwischen den Positionsinformationen festgestellt. Der Schwellwert ist beispielsweise größer oder gleich 0,5, vorzugsweise liegt der Schwellwert bei 0,75 oder 0,9.

Für die oben genannte Suchanfrage sind die erste Positionsinformation mit der letzten Scanposition des Briefs 8 und die zweite Positionsinformation beispielsweise ähnlich, wenn sich die letzte Scanposition des Briefs 8 zumindest in einem Radius von 10 Metern um die von der zweiten Positionsinformation umfasste Position befindet. Dies trifft zumindest mit einer hohen Wahrscheinlichkeit nur auf die Positionsinformation zu, die dem Container 7 zugeordnet ist, in den der Brief 8 an der Scanposition 11A verladen wurde.

Wenn als Ergebnis des Vergleichs in Schritt 505 keine Ähnlichkeit zwischen der ersten Positionsinformation und der zweiten Positionsinformation festgestellt wird, wird, wenn zumindest eine weitere Positionsinformation von dem Servern 2B und/oder 2C als Ergebnis der automatischen Suchanfrage empfangen wurde, Schritt 504 für die weiteren Positionsinformationen erneut durchgeführt.

Wenn als Ergebnis des Vergleichs in Schritt 505 eine Ähnlichkeit zwischen der ersten Positionsinformation und der zweiten Positionsinformation festgestellt wird, werden die ersten Positionsinformation und die zweite Positionsinformation in einem optionalen Schritt 506 verknüpft. Dies kann beispielsweise durch einen Verweis in den entsprechenden Datensätzen erfolgen. Wenn als Ergebnis mehrerer einzelner Vergleiche eine Ähnlichkeit festgestellt wurde, kann die Verknüpfung beispielsweise mit der ähnlichsten zweiten Positionsinformation erfolgen.

Zum Beispiel kann der Sendungsverfolgungsdatensatz des Briefs 8 auf den Sendungsverfolgungsdatensatz des Containers 7 verweisen, zum Beispiel auf die Positionsinformation mit dem jeweils jüngsten Zeitstempel des Containers 7.

Wenn als Ergebnis des Vergleichs in Schritt 505 eine Ähnlichkeit zwischen der ersten Positionsinformation und der zweiten Positionsinformation festgestellt wird, erzeugt der Server 2A anschließend Informationen betreffend die zweite Positionsinformation als zweites Ergebnis der Suchanfrage des Benutzers und sendet diese an den Client 4. Wenn als Ergebnis mehrerer einzelner Vergleiche eine Ähnlichkeit festgestellt wurde, erzeugt der Server 2A beispielsweise Informationen betreffend die ähnlichste zweite Positionsinformation.

Zum Beispiel erzeugt der Server 2A die Informationen aus dem dem Container 7 zugeordneten Sendungsverfolgungsdatensatz und sendet diese an den Client 4.

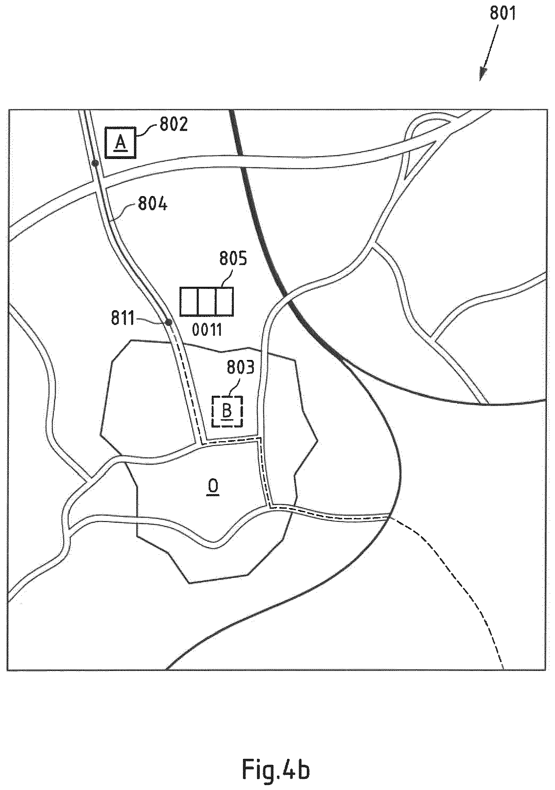

In einem Schritt 507 werden die Informationen betreffend die zweite Positionsinformation dem Benutzer auf dem Client 4 als zweites Ergebnis der Suchanfrage des Benutzers angezeigt. Zum Beispiel werden dem Benutzer die Informationen auf dem Kartenausschnitt an der in der zweiten Positionsinformation umfassten Position angezeigt. Zum Beispiel werden die Informationen zusätzlich oder alternativ zu den Informationen aus dem optionalen Schritt 503 angezeigt. Zum Beispiel wird dem Benutzer als Ergebnis der oben genannten Suchanfrage die in Fig. 4b dargestellte und unten erläuterte Anzeige auf der Anzeigeeinheit 45 des Clients 4 angezeigt.

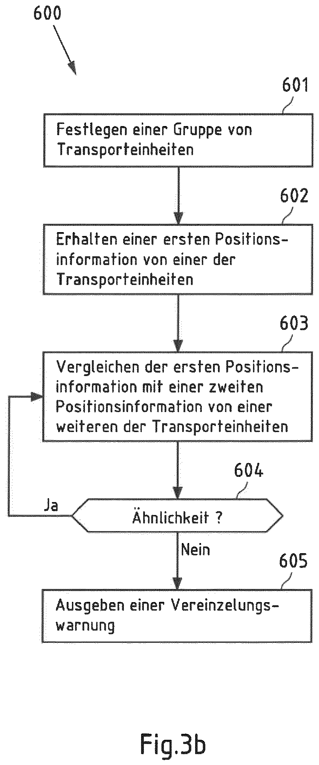

In Fig. 3b ist ein Ablaufdiagramm 600 dargestellt. Das Ablaufdiagramm 600 verwirklicht unter anderem den zweiten Aspekt, der beispielsweise eine Vereinzelungsüberwachung verwirklicht.

In einem Schritt 601 wird eine Gruppe von Transporteinheiten festgelegt. Zum Beispiel werden der Brief 8 und der Brief 9 gemeinsam versendet, so dass beispielsweise automatisch eine Gruppe durch den Brief 8 und den Brief 9 gebildet wird. Dies kann beispielsweise durch eine entsprechende Information in denen dem Brief 8 und dem Brief 9 zugeordneten Sendungsverfolgungsdatensätzen erfolgen, zum Beispiel durch einen Verweis.

In einem Schritt 602 wird eine erste Positionsinformation von einer der Transporteinheiten an dem Server 2A erhalten. Sobald die Server 2B und 2C eine Positionsinformation betreffend eine Gruppe von Transporteinheiten empfangen, leiten sie diese zum Beispiel an den Server 2A weiter. Zum Beispiel ist die erste Positionsinformation die zuletzt von der Scanposition 11A für den Brief 8 erzeugte Positionsinformation.

Anschließend wird die erste Positionsinformation mit einer zweiten Positionsinformation von einer weiteren Transporteinheit aus der Gruppe von Transporteinheiten in einem Schritt 603 verglichen.

Dazu sendet der Server 2A, ähnlich wie zu Schritt 504 ausgeführt, automatisch eine Suchanfrage betreffend weitere relevante Positionsinformationen, die den weiteren Transporteinheiten aus der Gruppe der Transporteinheiten zuordenbar oder zugeordnet sind, an den Server 2B und/oder 2C. Die Suchanfrage enthält beispielsweise die Trackingnummern der weiteren Transporteinheiten aus der Gruppe der Transporteinheiten. Zum Beispiel beschränkt der Server 2A die automatische Suchanfrage auf einen der Server und/oder auf Positionsinformationen mit einem Zeitstempel in einem definierten Zeitintervall um den Zeitstempel der ersten Positionsinformation. Zum Beispiel sendet der Server 2A eine Suchanfrage betreffend die dem Brief 9 zugeordnete Positionsinformationen mit dem jüngsten Zeitstempel an den Server 2B. Es ist auch denkbar, dass der Server 2A die Suchanfrage verzögert an den Server 2B und/oder 2C sendet (d.h. nach dem Erhalten der ersten Positionsinformationen zunächst einen bestimmtes Zeitintervall abwartet). Dies ist beispielsweise vorteilhaft, wenn die Positionsinformationen für die Briefe 8 und 9 nicht zeitgleich erzeugt werden können, zum Beispiel weil die Briefe nicht gleichzeitig gescannt werden können.

Der Server 2B und/oder 2C arbeitet die Suchanfrage ab und sendet alle weiteren Positionsinformationen, auf die die Suchanfrage zutrifft, an den Server 2A. Für die oben genannte Suchanfrage ist dies nur die dem Brief 9 zugeordnete Positionsinformation mit dem jüngsten Zeitstempel. Es ist auch denkbar, dass statt der weiteren Positionsinformationen die vollständigen Datensätze an den Server 2A gesendet werden.

Die zweite Positionsinformation ist eine an dem Server 2A von dem Server 2B oder 2C als Ergebnis der automatischen Suchanfrage empfangene weitere Positionsinformation. Wenn mehrere weitere Positionsinformationen an den Server 2A gesendet werden, wird beispielsweise jeder der weiteren Positionsinformationen einzeln mit der ersten Positionsinformation verglichen.

In einem Schritt 604 wird als Ergebnis des Vergleichs der ersten Positionsinformation mit der zweiten Positionsinformation von dem Server 2A festgestellt, ob die erste Positionsinformation und die zweite Positionsinformation ähnlich sind. Die erste Positionsinformation und die zweite Positionsinformation sind, wie oben ausgeführt, ähnlich, wenn sich die von der ersten Positionsinformation umfasste Position (zumindest mit einer hohen Wahrscheinlichkeit) zumindest in der Umgebung der von der zweiten Positionsinformation umfassten Position befindet. Für die den Briefen 8 und 9 zugeordneten Positionsinformationen liegt Ähnlichkeit beispielsweise nur dann vor, wenn beide zuletzt an derselben Scanposition gescannt wurden.

Wenn als Ergebnis des Vergleichs in Schritt 604 eine Ähnlichkeit zwischen der ersten Positionsinformation und der zweiten Positionsinformation festgestellt wird, wird, wenn zumindest eine weitere Positionsinformation von dem Servern 2B und/oder 2C als Ergebnis der automatischen Suchanfrage empfangen wurde, Schritt 603 für die weitere Positionsinformation erneut durchgeführt. Dies kann für alle Transporteinheiten aus der Gruppe von Transporteinheiten durchgeführt werden. Wenn als Ergebnis des Vergleichs in Schritt 604 keine Ähnlichkeit zwischen der ersten Positionsinformation und der zweiten Positionsinformation festgestellt wird, wird in Schritt 604 eine Vereinzelungswarnung an einen Benutzer ausgegeben. Zum Beispiel wird dem Benutzer die Trackingnummer der vereinzelten Transporteinheit mitgeteilt. Dazu kann beispielsweise die Transporteinheit durch einen Vergleich der Positionsinformationen aller Transporteinheiten aus der Gruppe der Transporteinheiten ermittelt werden, die von der Gruppe der Transporteinheiten getrennt wurde, insbesondere wenn die Gruppe aus mehr als zwei Transporteinheiten gebildet wird.

Zum Beispiel wird der für die Briefe 8 und 9 verantwortliche Disponent benachrichtigt, zum Beispiel durch eine automatisch versendete Kurzmitteilungsnachricht (SMS) und/oder Email.

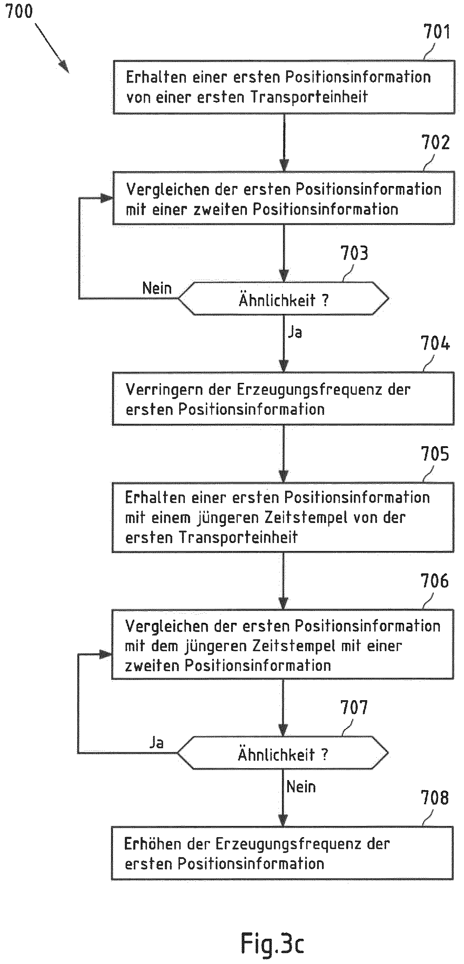

In Fig. 3c ist ein Ablaufdiagramm 700 dargestellt. Das Ablaufdiagramm 700 verwirklicht unter anderem den dritten Aspekt, der eine Verringerung der Erzeugungsfrequenz der ersten Positionsinformation betrifft.

In einem Schritt 701 wird eine erste Positionsinformation von einer ersten Transporteinheit an dem Server 2A erhalten. Die erste Transporteinheit ist beispielsweise eine Transporteinheit mit einem batterie- und/oder akkubetriebenen Positionssender. Sobald die Server 2B und 2C eine Positionsinformation betreffend eine Transporteinheit mit einem batteriebetriebenen Positionssender empfangen, leiten sie diese zum Beispiel an den Server 2A weiter.

Es ist auch denkbar, dass der Server 2A in regelmäßigen Abständen eine Suchanfrage betreffend Positionsinformationen mit dem jeweils jüngsten Zeitstempel, die einer Transporteinheit mit einem batteriebetriebenen Positionssender zugeordnet sind, an die Server 2B und 2C sendet. Die Server 2B und 2C arbeiten die Suchanfrage ab und senden die Positionsinformationen, auf die die Suchanfrage zutrifft, an den Server 2A. Wenn mehrere Positionsinformationen an den Server 2A gesendet werden, werden die folgenden Schritte 702 bis 708 beispielsweise für jede der Positionsinformationen einzeln durchgeführt.

Es ist auch denkbar, dass statt der Positionsinformationen die Datensätze, die die Positionsinformationen umfassen, zumindest teilweise an den Server 2A gesendet werden.

Die erste Positionsinformation ist beispielsweise die zuletzt von dem Container 7 erzeugte Positionsinformation.

In einem Schritt 702 wird die erste Positionsinformation mit einer zweiten Positionsinformation verglichen.

Dazu sendet der Server 2A, ähnlich wie zu Schritt 504 und 603 ausgeführt, automatisch eine Suchanfrage betreffend weitere relevante Positionsinformationen an den Server 2B und/oder 2C. Zum Beispiel beschränkt der Server 2A die automatische Suchanfrage auf einen der Server und/oder auf Positionsinformationen mit einem Zeitstempel in einem definierten Zeitintervall um den Zeitstempel der ersten Positionsinformation.

Zum Beispiel sendet der Server 2A eine automatische Suchanfrage betreffend alle weiteren einem Transportfahrzeug zugeordneten Positionsinformationen mit einem Zeitstempel in einem Zeitintervall von 1 Sekunde um den Zeitstempel der zuletzt von dem Container 7 erzeugten Positionsinformation an den Server 2C. An den Server 2B sendet der Server 2A in diesem Fall beispielsweise keine Suchanfrage, weil nur in der Telematikdatenbank auf Server 2C einem Transportfahrzeug zugeordnete Positionsinformationen gespeichert sind.

Der Server 2B und/oder 2C arbeitet die Suchanfrage ab und sendet alle weiteren Positionsinformationen, auf die die Suchanfrage zutrifft, an den Server 2A. Es ist auch denkbar, dass statt der weiteren Positionsinformationen die vollständigen Datensätze an den Server 2A gesendet werden.

Die zweite Positionsinformation ist eine von dem Servern 2B und/oder 2C als Ergebnis der automatischen Suchanfrage empfangene weitere Positionsinformation. Wenn mehrere weitere Positionsinformationen an den Server 2A gesendet werden, wird beispielsweise jeder der weiteren Positionsinformationen einzeln mit der ersten Positionsinformation verglichen.

In einem Schritt 703 wird als Ergebnis des Vergleichs der ersten Positionsinformation mit der zweiten Positionsinformation von dem Server 2A festgestellt, ob die erste Positionsinformation und die zweite Positionsinformation ähnlich sind. Die erste Positionsinformation und die zweite Positionsinformation sind, wie oben ausgeführt, ähnlich, wenn sich die von der ersten Positionsinformation umfasste Position (zumindest mit einer hohen Wahrscheinlichkeit) zumindest in der Umgebung der von der zweiten Positionsinformation umfassten Position befindet.

Für die oben genannte Suchanfrage sind die zuletzt von dem Container 7 erzeugte Positionsinformation und die zweite Positionsinformation beispielsweise ähnlich, wenn sich die letzte Position des Containers zumindest in einem Radius von 10 Metern um die von der zweiten Positionsinformation umfasste Position befindet. Dies trifft zumindest mit einer hohen Wahrscheinlichkeit nur auf die Positionsinformation mit dem jüngsten Zeitstempel zu, die der Zugmaschine 6 zugeordnet ist, die den Anhänger mit dem Container 7 zieht. Um die Genauigkeit zu erhöhen, kann der Vergleich beispielsweise einmal oder mehrmals für Positionsinformationen des Containers 7 mit einem älteren Zeitstempel und entsprechenden Positionsinformationen der Zugmaschine 6 wiederholt werden.

Wenn als Ergebnis des Vergleichs in Schritt 703 eine Ähnlichkeit zwischen der ersten Positionsinformation und der zweiten Positionsinformation festgestellt wird, wird in Schritt 704 die Erzeugungsfrequenz der ersten Positionsinformation verringert. Gleichzeitig wird der der ersten Transporteinheit zugeordnete Datensatz beispielsweise mit dem der zweiten Transporteinheit zugeordneten Datensatz verknüpft.

Zum Beispiel sendet der Server 2A und/oder der Server 2B eine entsprechende Anweisung an den Positionssender des Containers 7. Beispielsweise wird der Positionssender des Containers 7 angewiesen, eine Positionsinformation mit der aktuellen Position des Containers nur noch einmal in der Stunde zu erzeugen. Gleichzeitig wird der dem Container 7 zugeordnete Sendungsverfolgungsdatensatz beispielsweise mit dem der Zugmaschine 6 zugeordneten Telematikdatensatz verknüpft. Zum Beispiel kann der Sendungsverfolgungsdatensatz des Containers 7 auf den Telematikdatensatz der Zugmaschine 6 verweisen, zum Beispiel auf die Positionsinformation mit dem jeweils jüngsten Zeitstempel der Zugmaschine 6. Die Verringerung der Erzeugungsfrequenz ist unter anderem vorteilhaft, da die Positionssender von Transportfahrzeugen, wie der Zugmaschine 6, üblicherweise nicht oder zumindest nicht ausschließlich batterie- und/oder akkubetrieben sind. Dadurch kann der batteriebetriebene Positionssender des Containers 7 geschont werden, da die Erzeugung der Positionsinformation (aufgrund der Ähnlichkeit der ersten und zweiten Positionsinformation) zumindest teilweise durch den zumindest nicht ausschließlich batterie- und/oder akkubetriebenen Positionssender der Zugmaschine 6 substituiert werden kann.

In einem Schritt 705 wird an dem Server 2A eine erste Positionsinformation mit einem jüngeren Zeitstempel von der ersten Transporteinheit erhalten. Sobald die Server 2B und 2C eine Positionsinformation betreffend die erste Transporteinheit empfangen, leiten sie diese zum Beispiel an den Server 2A weiter. Zum Beispiel ist die erste Positionsinformation mit dem jüngeren Zeitstempel die zuletzt von dem Container 7 erzeugte Positionsinformation (nachdem die Erzeugungsfrequenz verringert wurde).

In einem Schritt 706 wird die erste Positionsinformation mit dem jüngeren Zeitstempel mit einer zweiten Positionsinformation verglichen. Zum Beispiel wird die erste Positionsinformation mit dem jüngeren Zeitstempel mit der Positionsinformation der zweiten Transporteinheit mit dem jüngsten Zeitstempel verglichen. Dies ist besonders einfach, wenn die Datensätze in Schritt 704 verknüpft wurden. Andernfalls muss der Server 2A beispielsweise eine entsprechende Suchanfrage an den Server 2B und/oder den Server 2C senden.

Zum Beispiel wird die zuletzt von dem Container 7 erzeugte Positionsinformation (nachdem die Erzeugungsfrequenz verringert wurde) mit der Positionsinformation der Zugmaschine 6 mit dem jüngsten Zeitstempel verglichen.

In einem Schritt 706 wird, wie oben zu Schritt 703 ausgeführt, als Ergebnis des Vergleichs der ersten Positionsinformation mit dem jüngeren Zeitstempel mit der zweiten Positionsinformation von dem Server 2A festgestellt, ob die erste Positionsinformation und die zweite Positionsinformation ähnlich sind.

Wenn als Ergebnis des Vergleichs in Schritt 706 keine Ähnlichkeit zwischen der ersten Positionsinformation und der zweiten Positionsinformation festgestellt wird, wird in einem Schritt 708 die Erzeugungsfrequenz der ersten Positionsinformation wieder erhöht. Gleichzeitig wird beispielsweise die Verknüpfung der Datensätze rückgängig gemacht.

Wenn als Ergebnis des Vergleichs in Schritt 706 eine Ähnlichkeit zwischen der ersten Positionsinformation und der zweiten Positionsinformation festgestellt wird, wird Schritt 705 erneut ausgeführt, sobald eine weitere erste Positionsinformation mit einem jüngeren Zeitstempel von der ersten Transporteinheit an dem Server 2A erhalten wird.

Zum Beispiel sendet der Server 2A und/oder der Server 2B dazu eine entsprechende Anweisung an den Positionssender des Containers 7. Gleichzeitig wird die Verknüpfung des dem Container 7 zugeordneten Sendungsverfolgungsdatensatzes mit dem der Zugmaschine 6 zugeordneten Telematikdatensatz rückgängig gemacht.

Fig. 4a bis 4f zeigen schematische Darstellungen eines auf der Anzeigeeinheit 45 des Clients 4 angezeigten Kartenausschnitts 801.

In dem Kartenausschnitt 801 ist die Lage des Ortes O und dessen Umgebung dargestellt. In der Umgebung des Ortes A stellt der Kartenausschnitt 801 unter anderem Straßen, einen Fluss und ein Meer dar.

Auf dem Kartenausschnitt in Fig. 4a bis 4f sind verschiedene Piktogramme angeordnet. Die Piktogramme sind jeweils lagerichtig entsprechend der Position der zugeordneten Einheit auf dem Kartenausschnitt 801 angeordnet und enthalten beispielsweise Informationen betreffend die Einheit. Der Typ der Einheit kann beispielsweise aus der grafischen Darstellung des Piktogramms entnommen werden.

Die in Fig. 4a bis 4f dargestellten Anzeigen werden einem Benutzer des Clients 4 beispielsweise als Ergebnis einer Suchanfrage betreffend den Brief 8 angezeigt. Die Anzeige wird beispielsweise vom Server 2A, wie zu Schritt 503 ausgeführt, erzeugt und zur Anzeige auf dem Client 4 bereitgestellt, zum Beispiel als anzeigbare Grafik. Der Server 2A erzeugt die Anzeige beispielsweise aus dem Sendungsverfolgungsdatensatz des Briefs 8 und/oder weiteren Datensätzen und dem entsprechenden Kartenausschnitt.

Die in Fig. 4a dargestellte Anzeige wird dem Benutzer beispielsweise als erstes Ergebnis der Suchanfrage betreffend den Brief 8 angezeigt. Auf dem Kartenausschnitt 801 ist in Fig. 4a ein Piktogramm 802 angeordnet. Das Piktogramm 802 ist der Scanposition 11A zugeordnet. Die Position 811 des Briefs 8 (mit einer Granularität, die zunächst dem ersten Ergebnis der Suchanfrage entspricht) ist auf dem Kartenausschnitt an der Scanposition 11A angeordnet. Des Weiteren ist auf dem Kartenausschnitt 801 in Fig. 4a die geplante Route 804 des Briefs 8 gestrichelt dargestellt. Die geplante Route 804 kann sich unter anderem aus dem Sendungsverfolgungsdatensatz des Briefs 8 ergeben, beispielsweise aus einem darin angegebenen Ziel, und/oder beispielsweise durch eine Abfrage bei einem Routenplanungssystem des verantwortlichen Logistikunternehmens ermittelt werden. Es ist auch denkbar, dass sich die geplante Route 804 nicht aus dem Sendungsverfolgungsdatensatz ergibt. In diesem Fall könnte beispielsweise weder die Route 804 noch das Piktogramm 803 angezeigt werden.

Die in Fig. 4a dargestellte Anzeige wird von dem Server 2A beispielsweise als erstes Ergebnis der Suchanfrage "0001" aus dem Sendungsverfolgungsdatensatz erzeugt und zur Anzeige auf dem Client 4 bereitgestellt, wenn der Brief bereits die Scanposition 11A passiert hat. Lediglich zur Illustration ist in Fig. 4a ferner die nächste Scanposition 11B mit dem Piktogramm 803 gestrichelt dargestellt, um die verhältnismäßig grobe Ortsauflösung eines lediglich auf Scanpositionen beruhenden Sendungsverfolgungsdienstes zu verdeutlichen.

Der Benutzer erhält somit als erstes Ergebnis der Suchanfrage nur die Informationen, die in dem Sendungsverfolgungsdatensatz gespeichert sind, welche sich auf die Scanpositionen in der Lieferkette beziehen. Die angezeigte Position 811 des Briefs 8 ist dabei sehr ungenau aufgrund der großen Abstände zwischen den Scanpositionen. Durch Anwendung des Vergleichs, wie beispielsweise in Schritt 504 beschrieben, kann der Informationsgehalt jedoch extrem gesteigert werden. Dies ist beispielsweise in den in Fig. 4b bis 4f dargestellten Anzeigen erkennbar, die dem Benutzer beispielsweise als zweites Ergebnis der Suchanfrage betreffend den Brief 8 angezeigt werden.

In der in Fig. 4b dargestellten Anzeige ist auf dem Kartenausschnitt 801 neben dem Piktogramm 802, der Position 811 und der geplanten Route 804 das Piktogramm 805 angeordnet. Das Piktogramm 805 ist ein dem Container 7 zugeordnetes Container-Piktogramm. Neben dem Piktogramm 805 wird die Inventarnummer "0011" des Containers 7 dargestellt. Das Piktogramm 805 und die Position 811 des Briefs 8 ist entsprechend der letzten bekannten Position des Containers 7 auf dem Kartenausschnitt 801 angeordnet. Die angezeigte Position spiegelt dabei die tatsächliche Position des Briefs sehr viel genauer als in Fig. 4a wider, da der Container 7 in regelmäßigen Zeitabständen eine Positionsinformation erzeugt und an den Server 2B sendet.

Die in Fig. 4b dargestellte Anzeige wird von dem Server 2A beispielsweise als zweites Ergebnis der Suchanfrage aus dem Sendungsverfolgungsdatensatz des Briefs 8 und dem Sendungsverfolgungsdatensatz des Containers 7 erzeugt und zur Anzeige auf dem Client 4 bereitgestellt, wenn sich aus dem Vergleich (z.B. in Schritt 504) ergibt, dass der Brief 8 in Container 7 verladen wurde.

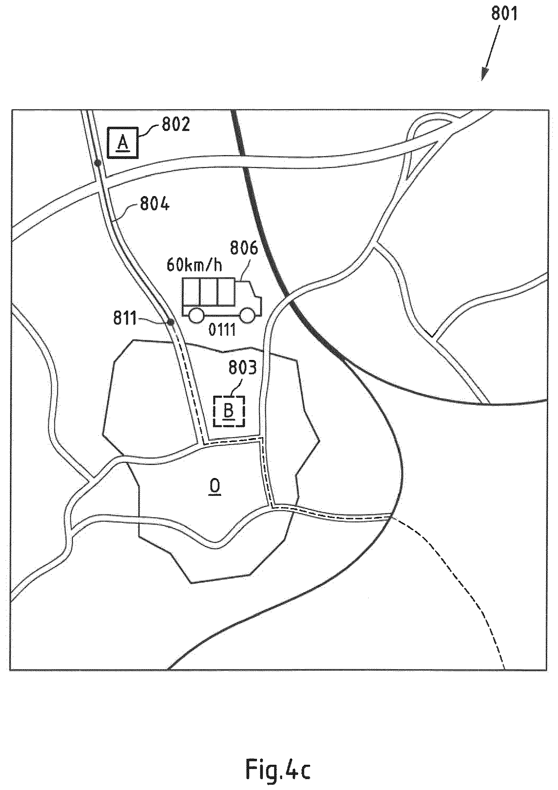

In der in Fig. 4c dargestellten Anzeige ist auf dem Kartenausschnitt 801 statt dem Piktogramm 805 das Piktogramm 806 angeordnet. Das Piktogramm 806 ist ein der Zugmaschine 6 zugeordnetes LKW-Piktogramm. Neben dem Piktogramm 806 wird die Fahrgestellnummer "0111" der Zugmaschine und die aktuelle Geschwindigkeit "60 km/h" dargestellt. Das Piktogramm 806 ist entsprechend der letzten bekannten Position der Zugmaschine 6 auf dem Kartenausschnitt 801 angeordnet.

Die in Fig. 4c dargestellte Anzeige wird von dem Server 2A beispielsweise als zweites Ergebnis der Suchanfrage aus dem Sendungsverfolgungsdatensatz des Briefs 8 und dem Telematikdatensatz der Zugmaschine 6 erzeugt und zur Anzeige auf dem Client 4 bereitgestellt, wenn sich aus dem Vergleich (z.B. in Schritt 504) ergibt, dass der Brief 8 und/oder der Container 7 von der Zugmaschine 6 transportiert wird. Durch diese Information kann des Weiteren beispielsweise der Beladungszustand, der Fahrzeugtyp und der Durchschnittsverbrauch der Zugmaschine dem Benutzer angezeigt werden oder anzeigbar sein. Zum Beispiel ist das Piktogramm 806 derart aktivierbar, dass bei Aktivierung weitere Informationen zur Auswahl angezeigt werden. Die weiteren Informationen können beispielsweise von dem Server 2A erzeugt werden, wenn der Benutzer sie auswählt. Zum Beispiel kann der Server 2A mit Hilfe der Informationen aus dem Telematikdatensatz der Zugmaschine 6, wie Beladung und Verbrauch, und dem Sendungsverfolgungsdatensatz des Briefs 8, wie Gewicht und Größe, den auf dem Transport des Briefs 8 tatsächlich erzeugten CO₂ Ausstoß berechnen und zur Anzeige bereitstellen. Außerdem kann beispielsweise die erwartete Ankunftszeit (der Zugmaschine 6 am Zielort) mit Hilfe von historischen Positionsinformationen in dem Telematikdatensatz der Zugmaschine 6 berechnet werden.

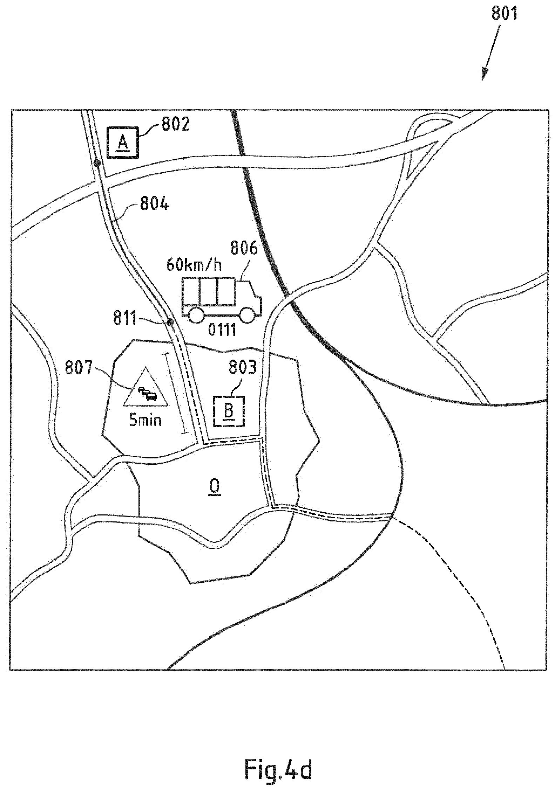

In der in Fig. 4d dargestellten Anzeige ist auf dem Kartenausschnitt 801 neben den Piktogrammen 802 und 806, der Position 811 und der geplanten Route 804 das Piktogramm 807 angeordnet. Das Piktogramm 807 ist ein einem Stau zugeordnetes Verkehrsstörungs-Piktogramm. Neben dem Piktogramm 807 wird die erwartete Verzögerung ("5min") durch die Verkehrsstörung angezeigt.

Die in Fig. 4d dargestellte Anzeige wird von dem Server 2A beispielsweise als zweites Ergebnis der Suchanfrage aus dem Sendungsverfolgungsdatensatz des Briefs 8 und dem Telematikdatensatz der Zugmaschine 6 erzeugt und zur Anzeige auf dem Client 4 bereitgestellt, wenn sich aus dem Vergleich (z.B. in Schritt 504) ergibt, dass der Brief 8 und/oder der Container 7 von der Zugmaschine 6 transportiert wird und das auf der geplanten Route 804 eine für die Zugmaschine 6 relevante Verkehrsstörung vorliegt. Die geplante Route 804 kann beispielsweise durch eine Abfrage beim Routenplanungssystem des verantwortlichen Logistikunternehmens ermittelt werden. Zum Beispiel kann der Server 2A auch die Positionsinformationen der Transportfahrzeuge abfragen, welche sich auf der geplanten Route 804 befinden und beispielsweise aus der aktuellen Geschwindigkeit der vorausfahrenden Fahrzeuge auf die Verkehrslage schließen, zum Beispiel der vorausfahrenden Fahrzeuge aus der Flotte des für den Brief 8 verantwortlichen Logistikunternehmens. Außerdem kann eine Abfrage bei einem Stauwarnsystem, wie beispielsweise dem Traffic Message Channel (TMC oder TMC Pro), erfolgen.

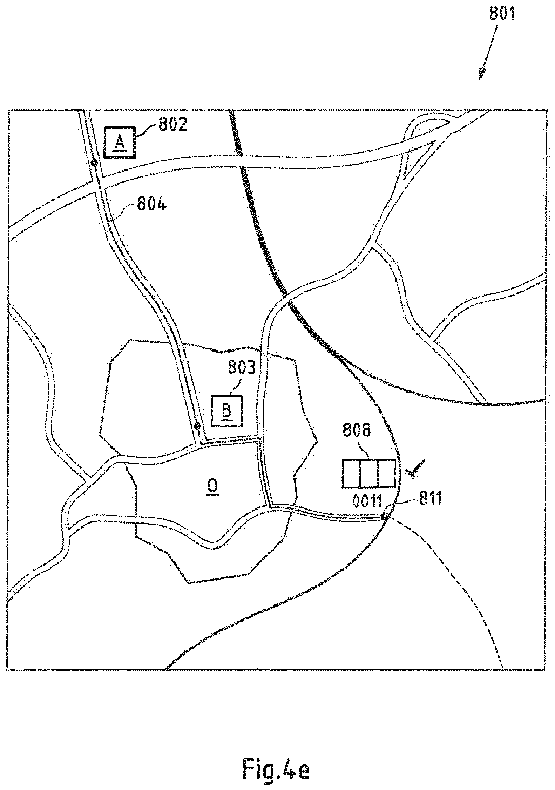

In der in Fig. 4e dargestellten Anzeige ist auf dem Kartenausschnitt 801 neben den Piktogrammen 802 und 803, der Position 811 und der geplanten Route 804 das Piktogramm 808 angeordnet. Die zweite Scanposition 11B wurde inzwischen passiert und wird daher ebenfalls als Piktogramm 803 angezeigt. Das Piktogramm 808 ist ein dem Container 7 zugeordnetes Container-Piktogramm. Neben dem Piktogramm 808 wird die Inventarnummer "0011" des Containers 7 dargestellt. Außerdem ist neben dem Piktogramm 808 ein Häkchen dargestellt. Das Piktogramm 808 und die Position 811 des Briefs 8 ist entsprechend der letzten bekannten Position des Containers 7 auf dem Kartenausschnitt 801 angeordnet.

Die in Fig. 4e dargestellte Anzeige wird von dem Server 2A beispielsweise als zweites Ergebnis der Suchanfrage aus dem Sendungsverfolgungsdatensatz des Briefs 8 und dem Sendungsverfolgungsdatensatz des Containers 7 erzeugt und zur Anzeige auf dem Client 4 bereitgestellt, wenn sich aus dem Vergleich (z.B. in Schritt 504) ergibt, dass der Brief 8 in Container 7 verladen wurde und sich der Container an dem vorgesehenen Containerstandort in dem Umschlaghafen befindet. Das neben dem Piktogramm 808 dargestellte Häkchen symbolisiert dabei, dass der Container 7 sich an dem richtigen Standort befindet.

Nachdem der Container 7 mit der Zugmaschine 6 am Hafen ankommt, wird die Positionsinformation des Containers 7 zum Beispiel mit den hafeninternen Verwaltungssystemen verglichen, zum Beispiel mit Positionsinformationen aus einer Containerstandortdatenbank. Sobald sich aus dem Vergleich (z.B. in Schritt 504) ergibt, dass sich der Container 7 an einem Containerstandort befindet, wechselt das Piktogramm auf der Karte von dem LKW-Piktogramm zu dem Container-Piktogramm 808. Des Weiteren können beispielsweise weitere Informationen aus den hafeninternen Verwaltungssystemen angezeigt werden oder anzeigbar sein. Zum Beispiel ist das Piktogramm 808 derart aktivierbar, dass bei Aktivierung weitere Informationen zur Auswahl angezeigt werden. Die weiteren Informationen können beispielsweise von dem Server 2A erzeugt werden, wenn der Benutzer sie auswählt. Zum Beispiel kann der Server 2A das Bild einer Überwachungskamera für den Containerstandort zur Anzeige bereitstellen. Bei dem Umladen des Containers 7 auf ein Flugzeug kann ähnlich verfahren werden. Zusätzlich können jedoch noch weitere Informationen angezeigt werden oder anzeigbar sein (z.B. die Route der Dollies/Transportfahrzeuge am Flughafen).

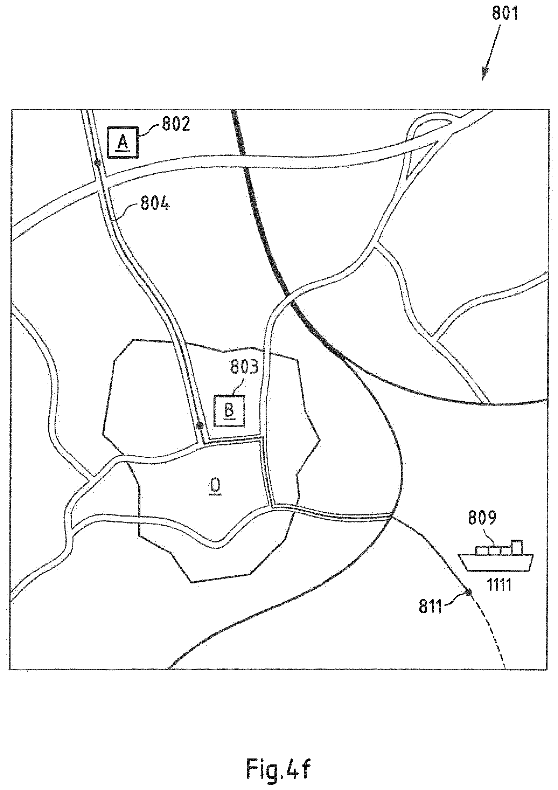

In der in Fig. 4f dargestellten Anzeige ist auf dem Kartenausschnitt 801 neben den Piktogrammen 802 und 803, der Position 811 und der geplanten Route 804 das Piktogramm 809 angeordnet. Das Piktogramm 809 ist ein dem Containerschiff 10 zugeordnetes Schiff-Piktogramm. Neben dem Piktogramm 809 wird die Kennung "1111" des Schiffs 11 dargestellt. Das Piktogramm 809 und die Position 811 des Briefs 8 ist entsprechend der letzten bekannten Position des Schiffs 10 auf dem Kartenausschnitt 801 angeordnet.

Die in Fig. 4f dargestellte Anzeige wird von dem Server 2A beispielsweise als zweites Ergebnis der Suchanfrage aus dem Sendungsverfolgungsdatensatz des Briefs 8 und dem Sendungsverfolgungsdatensatz des Containers 7 erzeugt und zur Anzeige auf dem Client 4 bereitgestellt, wenn sich aus dem Vergleich (z.B. in Schritt 504) ergibt, dass der Brief 8 in Container 7 verladen wurde und der Container 7 von dem Schiff 10 transportiert wird.

Dazu werden beispielsweise die Daten des Forwarders, auf welches Schiff der Container verladen werden soll, mit den Positionsinformationen (z.B. den AIS-Informationen) aller relevanten Containerschiffe verglichen und eine Vorverknüpfung durchgeführt. Sollten die Positionsinformationen des Containers 7 mit den Positionsinformationen des Schiffes 10 anfangen übereinzustimmen (z.B. ungefähr gleiche Geschwindigkeit, ähnliche Bewegungsrichtung, ähnliche Position und/oder ähnlicher Geschwindigkeitsvektor), so werden die Datensätze des Containers 7 und des Schiffs 10 miteinander verknüpft (z.B. kombiniert) und statt des Container-Piktogramms wird ein Schiff-Piktogramm 809 angezeigt. Außerdem kann von einer Landkartenansicht auf eine Seekartenansicht umgeschaltet werden, da nun davon ausgegangen werden kann, dass die Sendung sich auf See befindet.

Des Weiteren können beispielsweise weitere AIS-Informationen angezeigt werden oder anzeigbar sein. Zum Beispiel ist das Piktogramm 809 derart aktivierbar, dass bei Aktivierung weitere Informationen zur Auswahl angezeigt werden. Die weiteren Informationen können beispielsweise von dem Server 2A erzeugt werden, wenn der Benutzer sie auswählt. Sollte die geplante Route durch eine Unwetterzone führen, so können von Server 2A relevante Unwetter bezogen auf den tatsächlichen Routenweg des Schiffes 10 abgefragt und entsprechende Informationen zur Anzeige auf dem Client 4 bereitgestellt werden. Somit müssten keine globalen Wetterdaten angezeigt werden, sondern nur die für den Benutzer relevanten. Die geplante Route kann sich unter anderem aus in dem Telematikdatensatz des Schiffs 10 gespeicherten historischen Positionsinformationen ergeben.

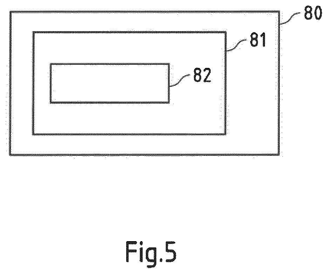

In Fig. 5 ist ein Blockdiagramm einer beispielhaften Ausführungsform eines erfindungsgemäßen Speichermediums 80 dargestellt. Das Speichermedium ist vorzugsweise ein computerlesbares Speichermedium. Das Speichermedium kann insbesondere ein physikalisches und/oder dingliches Speichermedium sein, welches vom zumindest einem der Server 2A, 2B und 2C und/oder dem Client 4 auslesbar ist.

Das Speichermedium 80 umfasst ein Programm 81 mit Programmanweisungen 82. Die Programmanweisungen 82 veranlassen eine Vorrichtung, beispielsweise zumindest einige der Schritte der Ablaufdiagramme 500, 600, 700 und 900 zumindest teilweise auszuführen, wenn das Programm auf einem Prozessor der Vorrichtung ausgeführt wird. Zum Beispiel ist das Programm zumindest auf einem der Prozessoren 20 und 40 ausführbar.

Die Abfolge der in dieser Spezifikation geschilderten Verfahrenschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

## Patentansprüche

1. Verfahren, ausgeführt von zumindest einer Vorrichtung (2A, 2B, 2C, 4), das Verfahren umfassend:
- Vergleichen (504, 603, 702, 706, 903) einer ersten Positionsinformation mit zumindest einer zweiten Positionsinformation, wobei die erste Positionsinformation einer ersten Transporteinheit (6-10) zugeordnet ist, und wobei die zweite Positionsinformation einer zweiten Transporteinheit (6-10)zugeordnet ist, und
- wenn als Ergebnis des Vergleichs eine Ähnlichkeit zwischen der ersten und der zweiten Positionsinformation festgestellt wird (505, 604, 703, 707, 904), automatisches Assoziieren der ersten Transporteinheit mit der zweiten Transporteinheit (506, 507, 905),
wobei der ersten Transporteinheit (6-10) ein erster Datensatz und der zweiten Transporteinheit (6-10) ein zweiter Datensatz zugeordnet ist, wobei jeder der Datensätze zumindest eine Positionsinformation der zugeordneten Transporteinheit umfasst, wobei das Assoziieren der ersten Transporteinheit mit der zweiten Transporteinheit das zumindest teilweise Verknüpfen des ersten Datensatzes mit dem zweiten Datensatz umfasst,
**dadurch gekennzeichnet, dass** das zumindest teilweise Verknüpfen des ersten Datensatzes mit dem zweiten Datensatz umfasst:
- Verknüpfen des ersten Datensatzes durch einen Verweis auf den zweiten Datensatz oder auf eine darin enthaltene Positionsinformation; oder
- zumindest teilweises Zusammenfassen der Datensätze in einem neuen Datensatz.

2. Verfahren nach Anspruch 1, wobei jede einer Transporteinheit (6-10) zugeordnete Positionsinformation eine Position der Transporteinheit umfasst.

3. Verfahren nach einem der Ansprüche 1-2, wobei die Datensätze dauerhaft verknüpft werden.

4. Verfahren nach einem der Ansprüche 1-2, wobei die Datensätze lediglich temporär verknüpft werden, insbesondere nur solange, wie die erste Transporteinheit (6-10) und die zweite Transporteinheit (6-10) eine räumliche Gruppe bilden.

5. Verfahren nach einem der Ansprüche 1-4, wobei die erste Positionsinformation von einer Kontrolleinheit (11A, 11B), insbesondere einer mobilen oder ortsfesten Scanposition, oder der ersten Transporteinheit (6-10) erzeugt wird, und wobei die zweite Positionsinformation von der zweiten Transporteinheit (6-10) erzeugt wird.

6. Verfahren nach einem der Ansprüche 1-5, wobei der erste Datensatz ein Datensatz in einer Positionsdatenbank, einer Fuhrparkdatenbank, einer Telematikdatenbank, einer Sendungsverfolgungsdatenbank und/oder einer Logistikdatenbank ist und/oder der zweite Datensatz ein Datensatz in einer Positionsdatenbank, einer Fuhrparkdatenbank, einer Telematikdatenbank, einer Sendungsverfolgungsdatenbank und/oder einer Logistikdatenbank ist.

7. Verfahren nach einem der Ansprüche 1-6, ferner umfassend:
- Erhalten einer Suchanfrage eines Benutzers betreffend die erste Transporteinheit (501),
- Anreichern von Informationen betreffend die erste Transporteinheit, die in dem ersten Datensatz gespeichert sind, mit Informationen betreffend die zweite Transporteinheit, die in dem zweiten Datensatz gespeichert sind, und
- Ausgeben der angereicherten Informationen betreffend die erste Transporteinheit als Ergebnis der Suchanfrage (507).

8. Verfahren nach Anspruch 7, wobei die erste Transporteinheit eine Sendung (8, 9) ist, und wobei die zweite Transporteinheit ein Transportbehälter (7) oder ein Transportfahrzeug (6, 10) für die Sendung ist, und wobei die Informationen betreffend die Sendung (8, 9) mit Telematikinformationen betreffend den Transportbehälter (7) oder das Transportfahrzeug (8, 9) angereichert werden.

9. Verfahren nach einem der Ansprüche 1-8, ferner umfassend:
- Verringern einer Frequenz, mit der die erste und/oder zweite Positionsinformation erzeugt wird, wenn als Ergebnis des Vergleichs eine Ähnlichkeit zwischen der ersten und der zweiten Positionsinformation festgestellt wird, und/oder
- Erhöhen der Frequenz, wenn als Ergebnis des Vergleichs keine Ähnlichkeit zwischen der ersten und der zweiten Positionsinformation festgestellt wird.

10. Verfahren nach einem der Ansprüche 1-9,wobei bei dem Vergleichen als zweite Positionsinformationen nur Positionsinformationen mit einem Zeitstempel berücksichtigt werden, der in einem definierten Zeitintervall um einen Zeitstempel der ersten Positionsinformation liegt.

11. Vorrichtung (2A) umfassend Mittel (20-23) zur Ausführung des Verfahrens nach einem der Ansprüche 1 bis 10.

12. System (1, 3) umfassend
- eine oder mehrere Vorrichtungen (2A, 2B, 2C, 4, 6-10, 11A, 11B) mit Mitteln zur Ausführung des Verfahrens nach einem der Ansprüche 1 bis 10.

13. Programm (81) umfassend
- Programmanweisungen (82), wobei die Programmanweisungen einen Prozessor (20, 40) zur Ausführung des Verfahrens nach einem der Ansprüche 1-10 veranlassen, wenn das Programm auf dem Prozessor (20, 40) ausgeführt wird.

## Claims

1. Method, performed by at least one apparatus (2A, 2B, 2C, 4), the method comprising:
- comparing (504, 603, 702, 706, 903) a first piece of positional information with at least a second piece of positional information, wherein the first piece of positional information is assigned to a first transport unit (6-10) and wherein the second piece of positional information is assigned to a second transport unit (6-10), and
- if as a result of the comparison a similarity between the first and the second piece of positional information is determined (505, 604, 703, 707, 904), automatically associating the first transport unit with the second transport unit (506, 507, 905) wherein a first data record is assigned to the first transport unit (6-10) and a second data record is assigned to the second transport unit (6-10), wherein each of the data records comprises at least a piece of positional information of the assigned transport unit, and wherein the associating of the first transport unit with the second transport unit at least comprises the at least partial linking of the first data record with the second data record,
**characterized in that**
the at least partial linking of the first data record and the second data record comprises:
- linking the first data record by a reference to the second data record or to a piece of positional information contained therein, or
- at least partially combining the data records into a new data record.

2. Method according to claim 1, wherein each piece of positional information that is assigned to a transport unit (6-10) comprises a position of the transport unit.

3. Method according to any of the claims 1-2, wherein the data records are linked permanently.

4. Method according to any of claims 1-2, wherein the data records are only temporarily linked, in particular only as long as the first transport unit (6-10) and the second transport unit (6-10) form a spatial group.

5. Method according to any of claims 1 to 4, wherein the first piece of positional information is generated by a control unit (11A, 11B), in particular by a mobile or fixed scanning position, or the first transport unit (6-10), and wherein the second piece of positional information is generated by the second transport unit (6-10).

6. Method according to any of claims 1 to 5, wherein the first data record is a data record in a positional database, a vehicle fleet database, a telematics database, a consignment tracking database and/or a logistics database, and/or wherein the second data record is a data record in a positional database, a vehicle fleet database, a telematics database, a consignment tracking database and/or a logistics database..

7. Method according to any of claims 1 to 6, further comprising:
- obtaining a search query by a user concerning the first transport unit (501),
- enriching pieces of information concerning the first transport unit, which are stored in the first data record, with pieces of information concerning the second transport unit, which are stored in the second data record, and
- outputting the enriched pieces of information concerning the first transport unit as the result of a search query (507).

8. Method according to claim 7, wherein the first transport unit is a consignment (8, 9), and wherein the second transport unit is a transport container (7) or a transport vehicle (6, 10) for the consignment, and wherein the pieces of information concerning the consignment (8, 9) are enriched with pieces of telematics information concerning the transport container (7) or the transport vehicle (8, 9).

9. Method according to any of claims 1 to 8, further comprising:
- reducing a frequency with which the first and/or second piece of positional information is generated, if as a result of the comparison a similarity between the first and the second piece of positional information is determined, and/or
- increasing the frequency, if as a result of the comparison no similarity between the first and the second piece of positional information is determined.

10. Method according to any of the claims 1-9, wherein in the comparison, only pieces of positional information with a timestamp that falls within a defined interval of time around the timestamp of the first piece of positional information are considered as second pieces of positional information.

11. Apparatus (2A) comprising means (20-23) for performing the method according to any of claims 1 to 10.

12. System (1, 3) comprising
- one or more apparatuses (2A, 2B, 2C, 4, 6-10, IIA, IIB) with means for performing the method according to any of claims 1 to 10.

13. Program (81) comprising
- program instructions (82), wherein the program instructions cause a processor (20, 40) to perform the method according to any of claims 1-10, when the program is run on the processor (20, 40).

## Revendications

1. Procédé exécuté par au moins un dispositif (2A, 2B, 2C, 4), le procédé comprenant :
- la comparaison (504, 603, 702, 706, 903) d'une première information de position à au moins une deuxième information de position, dans lequel la première information de position est associée à une première unité de transport (6 - 10), et dans lequel la deuxième information de position est associée à une deuxième unité de transport (6 - 10), et
- quand une similitude entre la première et la deuxième information de position est constatée en tant que résultat de la comparaison (505, 604, 703, 707, 904), l'association automatique de la première unité de transport à la deuxième unité de transport (506, 507, 905),
dans lequel un premier jeu de données est associé à la première unité de transport (6 - 10) et un deuxième jeu de données est associé à la deuxième unité de transport (6 - 10), dans lequel chacun des jeux de données comprend au moins une information de position de l'unité de transport associée, dans lequel l'association de la première unité de transport à la deuxième unité de transport comprend la combinaison au moins partielle du premier jeu de données et du deuxième jeu de données,
**caractérisé en ce que**
la combinaison au moins partielle du premier jeu de données et du deuxième jeu de données comprend :
- la combinaison du premier jeu de données par un renvoi au deuxième jeu de données ou à une information de position contenue dans celui-ci ; ou
- le regroupement au moins partiel des jeux de données dans un nouveau jeu de données.

2. Procédé selon la revendication 1, dans lequel chaque information de position associée à une unité de transport (6 - 10) comprend une position de l'unité de transport.

3. Procédé selon l'une quelconque des revendications 1 et 2, dans lequel les jeux de données sont combinés de manière durable.

4. Procédé selon l'une quelconque des revendications 1 et 2, dans lequel les jeux de données sont combinés seulement de manière temporaire, en particulier seulement tant que la première unité de transport (6 - 10) et la deuxième unité de transport (6 - 10) forment un groupe spatial.

5. Procédé selon l'une quelconque des revendications 1 à 4, dans lequel la première information de position est générée par une unité de contrôle (11A, 11B), en particulier une position de balayage mobile ou stationnaire, ou la première unité de transport (6 - 10), et dans lequel la deuxième information de position est générée par la deuxième unité de transport (6 - 10).

6. Procédé selon l'une quelconque des revendications 1 à 5, dans lequel le premier jeu de données est un jeu de données dans une base de données de position, une base de données de parc de véhicules, une base de données télématiques, une base de données de suivi des envois et/ou une base de données de logistique, et/ou le deuxième jeu de données est un jeu de données dans une base de données de position, une base de données de parc de véhicules, une base de données télématiques, une base de données de suivi d'envois et/ou une base de données de logistique.

7. Procédé selon l'une quelconque des revendications 1 à 6, comprenant en outre :
- l'obtention d'une demande de recherche d'un utilisateur concernant la première unité de transport (501),
- l'accumulation d'informations concernant la première unité de transport, qui sont mémorisées dans le premier jeu de données, avec des informations concernant la deuxième unité de transport, qui sont mémorisées dans le deuxième jeu de données, et
- l'envoi des informations accumulées concernant la première unité de transport en tant que résultat de la demande de recherche (507).

8. Procédé selon la revendication 7, dans lequel la première unité de transport est un envoi (8, 9), et dans lequel la deuxième unité de transport est un contenant de transport (7) ou un véhicule de transport (6, 10) pour l'envoi, et dans lequel les informations concernant l'envoi (8, 9) sont enrichies avec des informations télématiques concernant le contenant de transport (7) ou le véhicule de transport (8, 9).

9. Procédé selon l'une quelconque des revendications 1 à 8, comprenant en outre :
- la réduction d'une fréquence, avec laquelle la première et/ou la deuxième information de position est générée, quand une similitude entre la première et la deuxième information de position est constatée en tant que résultat de la comparaison, et/ou
- l'augmentation de la fréquence quand aucune similitude entre la première et la deuxième information de position n'est constatée en tant que résultat de la comparaison.

10. Procédé selon l'une quelconque des revendications 1 à 9, dans lequel ne sont prises en compte, lors de la comparaison, en tant que deuxièmes informations de position, que des informations de position avec une marque d'horodatage, qui se situe dans un intervalle de temps défini autour d'une marque d'horodatage de la première information de position.

11. Dispositif (2A) comprenant des moyens (20 - 23) servant à exécuter le procédé selon l'une quelconque des revendications 1 à 10.

12. Système (1, 3) comprenant
- un ou plusieurs dispositifs (2A, 2B, 2C, 4, 6 - 10, 11A, 11B) avec des moyens servant à exécuter le procédé selon l'une quelconque des revendications 1 à 10.

13. Programme (81) comprenant
- des instructions de programme (82), dans lequel les instructions de programme amènent le processeur (20, 40) à exécuter le procédé selon l'une quelconque des revendications 1 à 10 quand le programme est exécuté sur le processeur (20, 40).
